# EUROPÄISCHE PATENTSCHRIFT

(11) **EP 2 681 632 B1**
(45) Veröffentlichungstag und Bekanntmachung des Hinweises auf die Patenterteilung: **08.11.2017**
(21) Anmeldenummer: 12709507.3
(22) Anmeldetag: 27.02.2012
(51) Int. Cl.: G05B 19/042, H04L 5/02

(54) **BUSSYSTEM MIT EINEM MASTER UND EINER GRUPPE VON SLAVES SOWIE KOMMUNIKATIONSVERFAHREN ZUM AUSTAUSCH VON DATEN IN EINEM DERARTIGEN BUSSYSTEM**
BUS SYSTEM WITH A MASTER AND A GROUP OF SLAVES AND COMMUNICATION METHOD TO EXCHANGE DATA IN SUCH A BUSSYSTEM
SYSTÈME DE BUS AVEC UN MAÎTRE ET UN GROUPE D'ESCLAVES ET PROCÉDÉ DE COMMUNICATION POUR ÉCHANGER DES DONNÉES DANS UN TEL SYSTÈME DE BUS

(30) Priorität: 01.03.2011 DE 102011012766; 05.05.2011 EP 11003691
(43) Veröffentlichungstag der Anmeldung: 08.01.2014
(73) Patentinhaber: AS-International Association e.V., 63571 Gelnhausen (DE)
(72) Erfinder: BREUNINGER, Matthias, 70195 Stuttgart (DE); HANDTE, Thomas, 70794 Filderstadt (DE); HAGMEYER, Dr. Hanns Thilo, 73312 Geislingen/Steige (DE)
(74) Vertreter: Vonnemann, Gerhard
(86) Internationale Anmeldenummer: PCT/EP2012/000839
(87) Internationale Veröffentlichungsnummer: WO 2012/116801

(56) Entgegenhaltungen:
- EP-A2- 1 601 219
- WO-A2-02/11380
- US-A- 4 646 295
- US-A1- 2005 123 000

## Beschreibung

### Technisches Gebiet:

Die Erfindung betrifft ein Bussystem mit einem Master und wenigstens einer Gruppe von über einen Bus parallel an den Master angeschlossenen Slaves. Die Erfindung betrifft ferner ein Kommunikationsverfahren zum Austausch von Daten zwischen einem Master und wenigstens einer Gruppe von über einen Bus parallel an den Master angeschlossenen Slaves in einem den Master, die Slaves und den Bus umfassenden Bussystem, insbesondere einem AS-i-Bussystem.

### Stand der Technik:

In herkömmlichen Aktuator-Sensor-Interface-Bussystemen (abgekürzt: AS-i-Bussystemen) ist an einen Master eine Mehrzahl von Slaves über einen Zweidraht-Bus parallel angeschlossen. Der Bus dient sowohl für die Kommunikation zwischen Master und Slaves als auch, über die gleichen Leitungen, zur Spannungsversorgung des Masters und der Slaves. Für die Kommunikation mit den Slaves durchläuft der Master Sendephasen, auch Downlinkphasen genannt, in welchen er Daten an die Slaves sendet und diese somit anspricht, und Empfangsphasen, auch Uplinkphasen genannt, in welchen er Daten (Meldungen) von den Slaves empfängt, in einem fortlaufenden Zyklus, dem Buszyklus. In herkömmlichen AS-i-Bussystemen läuft ein kompletter Buszyklus in typischerweise 5....10ms ab. Die Zeit für den Ablauf eines kompletten Buszyklus wird als Zyklus-Periode bezeichnet.

Während jeder Sendephase spricht der Master die Slaves einzeln über den Bus an. Hierbei werden die Slaves jeweils durch eine vom Master gesendete individuelle Kennung, der Slave-Adresse nacheinander angesprochen; die auf die Kennung jeweils folgenden Daten, die z.B. Befehle oder Parameter enthalten können, werden nur von dem durch die Kennung angesprochenen Slave eingelesen und verarbeitet, während die übrigen, nicht von der Kennung angesprochenen Slaves diese Daten ignorieren bzw. auf diese Daten nicht reagieren oder diese Daten verwerfen. Jeder Slave erkennt also anhand der Kennung, ob er gerade angesprochen ist oder nicht. Jeder Slave erhält somit in jeder Sendephase über den Bus individuell nur für ihn bestimmte Daten, welchen eine Kennung des betreffenden Slaves vorausgeht. Anhand der Kennung erkennt der angesprochene Slave, dass die nachfolgenden Daten für ihn bestimmt sind. Anschließend sendet der Master über den Bus die nächste Kennung für den nächsten Slave, gefolgt von Daten für diesen Slave, usw.

Auf diese Weise kann der Master alle Slaves einzeln ansprechen und individuell mit Daten versorgen, obwohl alle Slaves über den Bus parallel an den Master angeschlossen sind. In jeder Sendephase wird jeder Slave genau einmal angesprochen. Nach diesem Prinzip spricht der Master zu jedem Zeitpunkt der Sendephase höchstens einen einzigen Slave und nie mehrere Slaves gleichzeitig oder zeitlich überlappend an.

Während der Empfangsphasen empfängt der Master die Antworten der einzelnen Slaves. Innerhalb jeder Empfangsphase gibt jeder Slave je einmal eine Meldung als Antwort an den Master aus. Die Meldung besteht in einer individuellen Kennung des Slaves und in Daten, welche z.B. Statusmeldungen oder Messdaten eines an den betreffenden Slave angeschlossenen Sensors sein können. Die Meldungen der einzelnen Slaves erfolgen hierbei innerhalb jeder Empfangsphase zeitlich nacheinander, so dass sich die einzelnen Meldungen nicht überlappen. Nach diesem Prinzip empfängt der Master zu jedem Zeitpunkt der Empfangsphase höchstens die Meldung eines einzigen Slaves und nie die Meldungen mehrerer Slaves gleichzeitig oder zeitlich überlappend.

D.h., jeder Slave beansprucht für seine Meldung nur einen Teil der Empfangsphase; dieser Teil wird im folgenden als "Ausgabephase" des betreffenden Slaves bezeichnet. Die dabei von dem Slave versandten Daten werden im folgenden als "Ausgabedatensätze" bezeichnet.

Dem Stand der Technik entsprechende AS-i-Bussysteme sind z.B. beschrieben in dem Buch "ASI: Das Aktuator-Sensor-Interface für die Automation", Hrsg. W. Kreisel und O. Madelung, Carl Hanser Verlag München Wien, 1994, ISBN 3-446-17825-2.

Nachteilig an diesem herkömmlichen, im Stand der Technik etablierten Kommunikationsprinzip ist, dass für die Kommunikation des Masters mit jedem der Slaves sowohl in der Sendephase als auch in der Empfangsphase pro Slave jeweils nur ein relativ kurzes Zeitfenster zur Verfügung steht, da sich die Slaves sowohl die Sende- als auch die Empfangsphase jeweils teilen müssen. Bei einem Bussystem mit z.B. der herkömmlicherweise maximal möglichen Anzahl von 62 Slaves steht somit in jedem Buszyklus pro Slave nur ein Bruchteil der Zeit zur Verfügung. Hierdurch ist der Umfang der pro Buszyklus zwischen Master und Slave austauschbaren Daten auf relativ geringe Datenmengen begrenzt, was sich in vielen Fällen negativ auswirkt und daher unerwünscht ist. Die Wortlänge ist beispielsweise auf 4 bit beschränkt.

Diesem Problem könnte dadurch begegnet werden, dass die Sendephase und die Empfangsphase und damit die Periode des Buszyklus verlängert werden. Hiermit ist jedoch der Nachteil verbunden, dass hierdurch die Zeitspanne, die zwischen zwei Meldungen ein- und desselben Slaves liegt, länger wird und sich die somit Reaktionszeit des Bussystems, z.B. in dem Fall, dass einer der Slaves eine Alarmmeldung ausgibt, entsprechend verlangsamt, d.h. das Bussystem wird auf diese Weise träger. In vielen Fällen der Praxis kommt es aber gerade auf eine kurze Reaktionszeit des Bussystems an. Dies kann insbesondere dann der Fall sein, wenn zeitkritische Sicherheitseinrichtungen betroffen sind, welche von Slaves überwacht werden. In solchen Fällen ist der genannte Nachteil sehr schwerwiegend und steht einer Vergrößerung der Zyklus-Periode oftmals entgegen. Im Gegenteil wäre es in vielen derartigen Fällen sogar wünschenswert, die Reaktionszeit des Bussystems verkürzen zu können.

Zudem wären bei einer Verlängerung der Buszyklus-Periode auch entsprechend weniger Buszyklen pro Sekunde möglich, so dass hierdurch eine Erhöhung der kommunizierbaren Datenmenge zwar pro Buszyklus, aber nicht pro Zeiteinheit möglich wäre.

Ein weiterer Nachteil von herkömmlichen AS-i-Bussystemen besteht, wie bereits erwähnt, darin, dass dort die Anzahl der in das System implementierbaren Slaves z.B. auf maximal 62 begrenzt ist.

### Technische Aufgabe:

Der Erfindung liegt daher die Aufgabe zu Grunde, ein Bussystem mit einem Master und einer Gruppe von Slaves sowie ein Kommunikationsverfahren zum Austausch von Daten in einem derartigen Bussystem zu schaffen, welche einen wesentlich höheren Umfang der pro Zeiteinheit zwischen dem Master und den Slaves austauschbaren Datenmenge und/oder eine wesentlich schnellere Reaktionszeit des Bussystems ermöglichen und/oder außerdem die Implementierung von mehr als 62 Slaves, z.B. die Implementierung von 128 Slaves, gestatten.

### Offenbarung der Erfindung und ihrer Vorteile:

[A1] Die Aufgabe wird erfindungsgemäß gelöst durch ein Kommunikationsverfahren zum Austausch von Daten zwischen einem Master und wenigstens einer Gruppe von über einen Bus parallel an den Master angeschlossenen Slaves, in einem den Master, die Slaves und den Bus umfassenden Bussystem gekennzeichnet durch folgende Schritte:
   a) jedem Slave der Gruppe wird wenigstens eine Kommunikationsfrequenz zugeordnet,
   b) der Master durchläuft Sendephasen, während weicher er verschiedene Sendedaten auf verschiedenen Kommunikationsfrequenzen auf den Bus aufgibt,
   c) von jedem Slave der Gruppe werden
      - solche Sendedaten eingelesen und verarbeitet, welche vom Master auf einer solchen Frequenz auf den Bus aufgegeben werden, die der diesem Slave im Schritt a) zugeordneten wenigstens einen Kommunikationsfrequenzen entspricht,
      - und solche Sendedaten ignoriert oder verwirft, welche vom Master auf einer solchen Frequenz auf den Bus aufgegeben werden, die nicht mindestens einer seiner zugeordneten Kommunikationsfrequenz entspricht.
      - Alle Slaves können somit parallel und gleichzeitig angesprochen werden. Die Reaktionszeit verringert sich, wobei
   m) der Master imstande ist, wenigstens eine Konfigurations-Sendephase zu durchlaufen, in welcher er Konfigurationsdaten auf wenigstens einer bestimmten Konfigurationsfrequenz auf den Bus aufgibt und wobei
   n) alle an den Bus angeschlossenen Slaves imstande sind, die Konfigurationsdaten, welche im Schritt m) vom Master auf den Bus aufgegeben werden, einzulesen und zu verarbeiten, so dass jeder an den Bus angeschlossene Slave vom Master durch die auf der mindestens einen Konfigurationsfrequenz ansprechbar ist.
      Dadurch ist jeder Slave der Gruppe einzeln vom Master ansprechbar, so dass der Master an den Slave Sendedaten auf wenigstens einer diesem zugeordneten Kommunikationsfrequenz über den Bus überträgt. Alle Slaves können somit parallel und gleichzeitig angesprochen werden. Die Reaktionszeit verringert sich.

   Weiterhin umfasst das Verfahren die folgenden Verfahrensschritte:
   f) der Master durchläuft wenigstens eine Zusatz-Sendephase, in welcher von ihm Zusatz-Sendedaten auf wenigstens einer bestimmten Zusatzfrequenz auf den Bus aufgegeben werden,
   g) von allen Slaves der Gruppe werden die Zusatz-Sendedaten, welche im Schritt f) vom Master auf der Zusatzfrequenz oder auf den Zusatzfrequenzen auf den Bus aufgegeben werden, eingelesen und verarbeitet, so dass alle Slaves der Gruppe vom Master durch die auf der Zusatzfrequenz oder auf den Zusatzfrequenzen übertragenen Zusatz-Sendedaten ansprechbar ist, auch wenn der Schritt a) noch nicht ausgeführt wurde oder diesen Slaves keine Kommunikationsfrequenz zugeordnet ist.

   Bevorzugt ist die Zusatz-Sendephase keine zeitlich zusätzliche Betriebsphase, sondern wenigstens einer Sendephase und/oder wenigstens einer Ausgabephase zeitlich überlagert.
   Bevorzugt enthalten die Zusatz-Sendedaten Informationen, welche jedem Slave der Gruppe je wenigstens eine Kommunikationsfrequenz zuordnen, so dass der Schritt a) mit Ausführung der Schritte f) und g) ausgeführt wird.
   Die Zusatz-Sendephase, im folgenden auch "Broadcast-Sendephase" genannt, dient vorzugsweise dazu, die Slaves der Gruppe mit Daten zu beschicken, bevor ihnen eine Kommunikationsfrequenz zugeordnet worden ist, und kann insbesondere dazu dienen, den Slaves ihre Kommunikationsfrequenzen zuzuordnen und auf diese Weise den Schritt a) auszuführen. Hierzu können die Zusatz-Sendedaten Siave-Kennungen oder Slave-Adressen enthalten, anhand welcher jeweils eine bestimmte Kommunikationsfrequenz einem individuellen Slave zugeordnet werden kann und/oder anhand welcher bestimmte Slaves individuell mit bestimmten Dateninhalten angesprochen werden, d.h., die Zusatz-Sendedaten können, je nach Bedarf, individuell an einzelne Slaves oder kollektiv an alle Slaves der Gruppe zugleich gerichtet sein.
   Die Zusatz-Sendephase bzw. Broadcast-Sendephase kann ferner z.B. dazu dienen, eine gemäß Schitt a) vorgenommen Zuordnung der Kommunikationsfrequenzen zu den Slaves wieder aufzuheben, also zu löschen, beispielsweise zu dem Zweck, anschließend in einer weiteren Broacast-Sendephase eine andere, geänderte Zuordnung der Kommunikationsfrequenzen zu den Slaves gemäß Schritt a) vollziehen zu können.
   Die Zusatz-Sendephase bzw. Broadcast-Sendephase kann insbesondere während der Sendephase oder während der Empfangsphase durchlaufen werden oder der Sende- oder Empfangsphase zeitlich überlappt sein. D.h., die Zusatz-Sendephase kann parallel zur Sende- bzw. Empfangsphase durchlaufen werden.
   Gemäß einer bevorzugten Variante werden in den Schritten f) und g) auf zwei oder mehreren Zusatzfrequenzen parallel Zusatz-Sendedaten an die Slaves gesandt und von diesen eingelesen. Auf diese Weise können bei der Übertragung der Zusatz-Sendedaten eine höhere Geschwindigkeit und/oder Redundanz und damit eine geringere Wahrscheinlichkeit von Übertragungsfehlern erreicht werden. Wenn die Verbindungsqualität überwacht wird, können automatisch die Kommunikationsfrequenzen geändert werden, um eine verbesserte Verbindung zu erreichen.
   Bevorzugt enthält nicht jeder Buszyklus eine Zusatz-Sendephase.
   Ebenso können auch eine oder mehrere Zusatz-Empfangsphasen bzw. Zusatz-Ausgabephasen, auch Broadcast-Empfangsphasen bzw. Broadcast-Ausgabephasen genannt, vorgesehen sein, in welchen die Slaves außerhalb der Kommunikationsfrequenzen Daten an den Master senden können. Gemäß einer weiteren vorteilhaften Variante des Bussystems sind die Slaves der Gruppe daher imstande, je wenigstens eine Zusatz-Ausgabephase, auch Broadcast-Ausgabephase genannt, zu durchlaufen, in welcher sie Broadcast-Ausgabedatensätze auf wenigstens einer Broadcast-Frequenz an den Master senden. Die Broadcast-Ausgabedatensätze können insbesondere Antworten der Slaves auf Befehle enthalten, welche die Slaves während der Broadcast-Sendephase vom Master erhalten haben. Die Broadcast-Frequenz, auf welcher die Ausgabedatensätze gesendet werden, ist gemäß einer bevorzugten Variante der Erfindung mit der Zusatzfrequenz, auf welcher die Zusatz-Sendedaten gesendet werden, identisch, wobei sich in diesem Fall die Broadcast-Sendephasen und die Broadcast-Ausgabephasen zeitlich nicht überlappen.
   Durch die Zusatz-Sendephase und die Zusatz-Ausgabephasen wird wenigstens ein zusätzlicher, als Broadcast-Kanal bezeichneter Kommunikationskanal zwischen dem Master und den Slaves geschaffen, welcher vom Datenaustausch über die Kommunikationsfrequenzen unabhängig ist.
   Bevorzugt geben die Slaves nur dann Broadcast-Ausgabedatensätze ab, wenn sie vorher vom Master dazu aufgefordert wurden. Bevorzugt enthält nicht jeder Buszyklus Broadcast-Ausgabephasen. Nicht während jeder Broadcast-Sendephase und nicht während jeder Broadcast-Ausgabephase müssen Daten über den Broadcast-Kanal bzw. die Broadcast-Kanäle übertragen werden.
   Die Broadcast-Sendephase und die Broadcast-Ausgabephasen können insbesondere dazu dienen, Steuerdaten auszutauschen, um das Bussystem zu initialisieren oder am Laufen zu halten, und um den Schritt a) auszuführen. Über diesen Kanal kann auch mit Vorteil die Synchronisation der Kommunikation erfolgen.
   Des Weiteren wird der Schritt a) ausgeführt wie folgt:
   a1) vom Master wird im Schritt f) durch Senden einer Kennung in den Zusatz-Sendedaten über den Bus ein erster der Slaves der Gruppe angesprochen,
   a2) der Master führt mit dem ersten Slave auf verschiedenen Testfrequenzen wenigstens je eine Test-Kommunikation durch,
   a3) zu jeder Test-Kommunikation wird das zugehörige Signal-/Rausch-Verhältnis oder die zugehörige Bitfehlerrate bestimmt,
   a4) von allen denjenigen im Schritt a2) benutzten Testfrequenzen, welche keinem Slave als Kommunikationsfrequenz zugeordnet sind, wird dem ersten Slave diejenige der Testfrequenzen als Kommunikationsfrequenz zugeordnet, mit welcher im Schritt a2) das höchste Signal-/Rausch-Verhältnis oder die geringste Bitfehlerrate erzielt wurde,
   a5) die Schritte a1)-a4) werden für die übrigen Slaves der Gruppe entsprechend wiederholt.

   Die Schritte a1) bis a5) enthalten somit eine Optimierung der Kommunikationsfrequenzen. Die so ausgehandeten Kanäle liefern die geringste Fehlerwahrscheinlichkeit.
   Die Bedingungen bei der Datenübertragung ändern sich aber in vielen Fällen mit der Zeit, beispielsweise aufgrund von Änderungen der Umgebungstemperatur oder von veränderlichen elektromagnetischen Störfeldern, welchen das Bussystem ausgesetzt ist. Im Fall von Slaves, die ihren Standort ändern, z.B. bei Slaves, welche an einem verfahrbaren Roboter angebracht und über ein flexibles Kabel mit dem Bus verbunden sind, oder bei Slaves, welche sich entlang einer Metallschiene bewegen, von der sie ihre Betriebsspannung per Schleifer abgreifen), können sich die Übertragungsbedingungen auch aufgrund von nicht konstanter Leitungsgeometrie ändern.
   Veränderte Übertragungsbedingungen können aber das Signal-/Rauschverhältnis oder die Bitfehlerrate ungünstig beeinflussen. Bevorzugt wird daher die genannte Optimierung den Übertragungsbedingungen nachgeführt, indem in regelmäßigen Zeitabständen die Zuordnung zwischen Kommunikationsfrequenzen und Slaves gelöscht wird und die Schritte a1) bis a5) erneut ausgeführt werden. Gemäß einer anderen Variante werden die Zuordnung zwischen Kommunikationsfrequenzen und Slaves dann gelöscht und die Schritte a1) bis a5) erneut ausgeführt, wenn Signal-/Rauschverhältnis (SNR) der Kommunikation mit wenigstens einem Slave einen bestimmten kritischen Wert unterschritten hat. Auf diese Weisen kann auf sich ändernde Übertragungsbedingungen kompensierend reagiert werden.
   Gemäß einer Variante umfasst das Bussystem nicht nur eine, sondern zwei oder mehrere Gruppen von Slaves, wobei das bisher beschriebene erfindungsgemäße Verfahren zunächst für eine dieser Gruppen, dann für eine zweite dieser Gruppen usw. durchgeführt wird. Insbesondere die Schritte a) bis c) können für eine Gruppe nach der anderen jeweils separat durchgeführt werden. Bevorzugt werden hierbei vor jeder Ausführung des Schrittes a) für eine Gruppe alle schon früher, d.h. bei vorausgehenden Ausführungen des Schrittes a), für eine andere Gruppe vollzogenen Zuordnungen zwischen Slaves und Kommunikationsfrequenzen gelöscht, damit ein- und dieselbe Kommunikationsfrequenz zu keinem Zeitpunkt zwei oder mehreren Slaves zugeordnet sein kann.
   Gemäß dieser Variante kommuniziert zu jedem Zeitpunkt höchstens eine Gruppe von Slaves, nämlich die zu diesem Zeitpunkt "aktive" Gruppe, mit dem Master. Die übrigen Gruppen von Slaves, falls vorhanden, sind zu diesem Zeitpunkt "passiv", d.h. keinem ihrer Slaves ist eine Kommunikationsfrequenz zugeordnet, und kein Slave einer "passiven" Gruppe liest Sendedaten ein, bzw. die Slaves einer "passiven" Gruppe ignorieren die Sendedaten oder verwerfen sie.
   Bevorzugt werden die Slaves ferner so programmiert, dass sie keine Ausgabedaten auf den Bus aufgeben, wenn ihnen keine Kommunikationsfrequenz zugeordnet ist, sie also zu einer "passiven" Gruppe gehören. Auf diese Weise kann die Eindeutigkeit des Empfängers von Sendedaten ebenso wie die Eindeutigkeit des Absenders von Ausgabedaten auch dann sichergestellt werden, wenn mehrere Gruppen von Slaves vorhanden sind.
   Gemäß einer Variante der Erfindung ist jeder Slave der Gruppe ausschließlich durch solche Sendedaten ansprechbar, welche auf einer ihm zugeordneten Kommunikationsfrequenz gesendet werden. Gemäß einer anderen Variante der Erfindung ist jeder an den Bus angeschlossene Slave auch durch solche Sendedaten ansprechbar, welche auf einer bestimmten Kofigurationsfrequenz oder auf bestimmten Konfigurationsfrequenzen gesendet werden. Gemäß einer weiteren Variante der Erfindung ist jeder Slave der Gruppe außerdem auch durch solche Sendedaten ansprechbar, welche auf der Zusatzfrequenz oder auf den Zusatzfrequenzen gesendet werden.
[A13] Die Aufgabe wird ferner gelöst durch ein Bussystem mit einem Master und wenigstens einer Gruppe von über einen Bus an den Master angeschlossenen Slaves, wobei
   - jedem Slave der Gruppe wenigstens eine Kommunikationsfrequenz zugeordnet ist oder zuordbar ist,
   - der Master Sendephasen zu durchlaufen imstande ist, während welcher er verschiedene Sendedaten auf verschiedenen Kommunikationsfrequenzen auf den Bus aufgibt,
   - jeder Slave der Gruppe imstande ist,
      - solche Sendedaten einzulesen und zu verarbeiten, welche der Master auf einer solchen Frequenz auf den Bus aufgibt, die
      - der diesem Slave wenigstens einen zugeordneten Kommunikationsfrequenz entspricht.
      - und solche Sendedaten ignorierend oder verwerfend ausgebildet ist, welche der Master auf einer solchen Frequenz auf den Bus aufgibt, die nicht mindestens einer seiner zugeordneten Kommunikationsfrequenz entspricht.

   Folglich ist jeder Slave der Gruppe dadurch einzeln vom Master ansprechbar. Da dies auch parallel mit allen anderen Slaves geschieht, kann die Wortbreite höher sein, z. B. 64 bit.
   Der Master ist dabei imstande, wenigstens eine Zusatz-Sendephase zu durchlaufen, in welcher er Zusatz-Sendedaten auf wenigstens einer bestimmten Zusatzfrequenz auf den Bus aufgibt, wobei alle Slaves der Gruppe imstande sind, die Zusatz-Sendedaten, welche der Master auf der mindestens einen Zusatzfrequenz auf den Bus aufgibt, einzulesen und zu verarbeiten, so dass alle Slaves der Gruppe vom Master durch die auf der Zusatzfrequenz oder auf den Zusatzfrequenzen übertragenen Zusatz Sendedaten ansprechbar sind, auch
   dann, wenn diesen Slaves keine oder noch keine Kommunikationsfrequenz zugeordnet ist.
   Insbesondere kann vorgesehen sein, dass der betreffende Slave die nicht für ihn bestimmten Sendedaten zwar einliest, diese aber nach Erfassung der Frequenz nicht weiter verarbeitet, sondern ignoriert oder sofort verwirft, z.B. durch Löschen derselben aus seinem Speicher.
   Dabei ist der Master imstande, jedem Slave der Gruppe dadurch wenigstens eine Kommunikationsfrequenz zuzuordnen, indem er als Zusatz-Sendedaten solche Daten auf den Bus aufgibt, weiche Informationen enthalten, die jedem Slave der Gruppe je wenigstens eine Kommunikationsfrequenz zuordnen, wobei die
   Zuordnung von wenigstens einer Kommunikationsfrequenz zu jedem Slave der Gruppe ausführbar wie folgt:
   - der Master spricht durch Senden einer Kennung in den Zusatz-Sendedaten über den Bus einen ersten der Slaves der Gruppe an,
   - der Master führt mit dem ersten Slave auf verschiedenen Testfrequenzen wenigstens je eine Test-Kommunikation durch,
   - zu jeder Test-Kommunikation wird das zugehörige Signal-/Rausch-Verhältnis oder die zugehörige Bitfehlerrate bestimmt,
   - von allen denjenigen hierbei benutzten Testfrequenzen, welche noch keinem Slave als Kommunikationsfrequenz zugeordnet sind, wird dem ersten Slave diejenige der Testfrequenzen als Kommunikationsfrequenz zugeordnet, mit welcher das höchste Signal-/Rausch-Verhältnis oder die geringste Bitfehlerrate erzielt wurde,
   - diese Vorgehensweise wird für die übrigen Slaves der Gruppe entsprechend wiederholt. Auf diese Weise werden mit anderen Worten in einer Trainingssequenz die Kanäle ausgehandelt.

   Die Gruppe von Slaves kann alle an den Bus angeschlossenen Slaves oder nur einen Teil der an den Bus angeschlossen Slaves umfassen. Insbesondere können an den Bus zwei oder mehrere Gruppen von Slaves angeschlossen sein, wobei die Schritte a), b) und c) für jede Gruppe separat ausgeführt werden können. Hierbei können die Gruppen einzelnen nacheinander durch z.B. je eine Gruppenkennung angesprochen werden. Die im Schritt a) vorgenommene Zuordnung kann vor jedem Übergang zur jeweils nächsten Gruppe gelöscht werden.
   Bevorzugt wird keinen zwei Slaves der Gruppe die gleiche Kommunikationsfrequenz zugeordnet, d.h., bevorzugt wird jede Kommunikationsfrequenz, die einem Slave der Gruppe zugeordnet wird, keinem anderen Slave der Gruppe zugeordnet.
[A14] In einem erfindungsgemäßen Bussystem ist bevorzugt keinen zwei Slaves der Gruppe die gleiche Kommunikationsfrequenz zugeordnet.
   Die Sendedaten bilden Sendedatensätze. Jeder Sendedatensatz wird vom Master auf einer bestimmten Kommunikationsfrequenz auf den Bus aufgegeben und ist individuell für einen bestimmten Slave bestimmt. Der Slave stellt die Kommunikationsfrequenzen der auf den Bus aufgegebenen Sendedatensätze fest. Solche Sendedatensätze, welche auf der oder auf einer diesem Slave zugeordneten Kommunikationsfrequenz über den Bus ankommen, erkennt der Slave anhand der Kommunikationsfrequenz als für ihn bestimmt; diese liest er ein und verarbeitet sie. Solche Sendedatensätze hingegen, welche auf der oder auf einer einem anderen Slave zugeordneten Kommunikationsfrequenz über den Bus ankommen, erkennt er anhand der Kommunikationsfrequenz als nicht für ihn bestimmt; diese ignoriert bzw. verwirft er daher. D.h. keiner der Slaves reagiert auf Befehle in solchen Sendedaten, die nicht für ihn bestimmt sind.
   Ob Sendedaten für ihn bestimmt sind oder nicht, erkennt somit jeder Slave erfindungsgemäß an der Kommunikationsfrequenz, auf welcher diese Sendedaten über den Bus ankommen. Die Kommunikationsfrequenz erfüllt demnach die Funktion einer Kennung des Slaves, für welchen die auf dieser Frequenz auf den Bus aufgegebenen Sendedaten bestimmt sind. Eine Kennung in Form einer digitalen Slave-Adresse als Empfänger-Identifikation braucht daher in den Sendedaten nicht enthalten zu sein, wodurch bei der Übertragung der Sendedaten Systemkapazität freigesetzt wird.
[A1] Gemäß einer Ausführungsform des erfindungsgemäßen Bussystems ist der Master imstande, während der Sendephasen gleichzeitig oder zeitlich überlappend jeweils Sendedaten auf verschiedenen Kommunikationsfrequenzen auf den Bus aufzugeben und auf diese Weise Sendedaten an alle Slaves der Gruppe oder an eine Mehrzahl von Slaves der Gruppe zugleich oder zeitlich überlappend zu übertragen.
[A2] Bevorzugt gibt der Master während der Sendephasen gleichzeitig oder zeitlich überlappend jeweils Sendedaten auf verschiedenen Kommunikationsfrequenzen auf den Bus auf und überträgt auf diese Weise an alle Slaves der Gruppe oder an eine Mehrzahl von Slaves der Gruppe zugleich oder zeitlich überlappend jeweils Sendedaten.
   Dies bedeutet, dass vorzugsweise die Slaves der Gruppe nicht, wie im Stand der Technik üblich, einer nach dem anderen Sendedaten vom Master erhalten, sondern gleichzeitig oder zumindest zeitlich überlappend. Der Master kann somit erfindungsgemäß parallel an jeden der Slaves der Gruppe Sendedaten übertragen, welche individuell nur für diesen Slave bestimmt sind und nur von diesem Slave eingelesen und verarbeitet, von den übrigen Slaves der Gruppe aber ignoriert bzw. verworfen werden.
   Somit steht für die Datenübertragung vom Master zum Slave, anders als im Stand der Technik, pro Slave nicht nur jeweils ein Bruchteil der Sendephase, bzw. Downlinkphase, zur Verfügung, sondern es steht mit Hilfe der Erfindung für jeden Slave der Gruppe jeweils die gesamte Sendephase bzw. Downlinkphase zeitlich ungeteilt zur Verfügung; es werden nicht Bruchteile der Sendephase, sondern die Kommunikationsfrequenzen auf die einzelnen Slaves verteilt. Vorteilhafterweise wird auf diese Weise die pro Buszyklus vom Master zu jedem der Slaves der Gruppe übertragbare Sendedatenmenge gegenüber dem Stand der Technik vervielfacht, z. B. von 4 bit Wortbreite auf 64 bit Wortbreite.
   Alternativ hierzu kann ohne Verringerung der pro Buszyklus vom Master zu den Slaves zu übertragenden Sendedatenmenge die Dauer der Downlinkphase im Vergleich zum Stand der Technik auf einen Bruchteil verringert werden, mit dem erheblichen Vorteil, dass auf diese Weise die Buszyklus-Periodendauer und damit die Reaktionszeit des Bussystems ohne Einbuße an pro Buszyklus übertragbarer Sendedatenmenge gegenüber dem Stand der Technik verkürzt werden kann.
   Diese Verbesserungen sind mit Hilfe der Erfindung möglich, weil erfindungsgemäß jeder Slave der Gruppe auf wenigstens einer eigenen, ihm im Schritt a) zugeordneten Kommunikationsfrequenz angesprochen wird und kein Slave der Gruppe solche Sendedaten verarbeitet, welche vom Master auf einer für einen anderen Slave reservierten Kommunikationsfrequenz auf den Bus aufgegeben werden, wodurch eine parallele Kommunikation des Masters mit den Slaves der Gruppe möglich wird.
   Gemäß einer Variante der Erfindung mit weiter erhöhter Sendedatenübertragungs-Kapazität pro Slave werden im Schritt a) jedem Slave der Gruppe zwei oder mehrere Kommunikationsfrequenzen zugeordnet, wobei der Master an jeden Slave der Gruppe die für diesen Slave bestimmten Sendedaten auf beiden oder mehreren diesem Slave zugeordneten Kommunikationsfrequenzen parallel sendet, so dass also die Übertragung von Sendedaten vom Master zu jedem Slave der Gruppe auf zwei oder mehreren parallelen Kanälen erfolgt, deren jeder durch eine diesem Slave im Schritt a) zugeordnete Kommunikationsfrequenz charakterisiert ist.
   Gemäß einer Untervariante hiervon werden hierbei über alle zu einem Slave führenden derartigen Kanäle jeweils die gleichen Sendedaten übertragen, so dass die Sendedatenübertragung an den Slave redundant über zwei oder mehrere Kanäle erfolgt und auf diese Weise die Störsicherheit und die Zuverlässigkeit der Sendedatenübertragung erhöht werden.
   Gemäß einer anderen Untervariante werden über die zu einem Slave führenden derartigen Kanäle jeweils verschiedene Sendedaten übertragen, so dass auf diese Weise die Bitrate bzw. Datenübertragungsrate der Sendedatenübertragung vom Master zu den Slaves erhöht wird.
[A16] Das erfindungsgemäße Bussystem kann so ausgebildet sein, dass
   - jeder der Slaves der Gruppe imstande ist, Ausgabephasen zu durchlaufen, während welcher er auf den Bus auf wenigstens einer solchen Frequenz, welche der mindestens einen Kommunikationsfrequenz entspricht, welche diesem Slave zugeordnet ist, Ausgabedatensätze aufgibt, und
   - der Master imstande ist,
      - die Ausgabedatensätze einzulesen, welche die Slaves der Gruppe auf den Bus aufgeben,
      - und jeden Ausgabedatensatz über dessen wenigstens einen Kommunikationsfrequenz demjenigen Slave der Gruppe zuzuordnen, welchem diese wenigstens eine Kommunikationsfrequenz zugeordnet ist.
[A3] Gemäß einer sehr vorteilhaften Variante des erfindungsgemäßen Kommunikationsverfahrens werden folgende weiteren Schritte ausgeführt:
   d) jeder der Slaves der Gruppe durchläuft Ausgabephasen, während weichen er auf den Bus auf wenigstens einer solchen Frequenz, welche
      - der mindestens einen Kommunikationsfrequenz entspricht, welche diesem Slave im Schritt a) zugeordnet worden ist,
         Ausgabedatensätze aufgibt,
   e) der Master liest die Ausgabedatensätze ein, welche im Schritt d) von den Slaves der Gruppe auf den Bus aufgegeben werden, wobei der Master jeden Ausgabedatensatz über dessen Kommunikationsfrequenz demjenigen Slave der Gruppe zuordnet, welchem diese Kommunikationsfrequenz im Schritt a) zugeordnet worden ist.

   Welche Ausgabedaten von welchem Slave stammen, erkennt der Master somit erfindungsgemäß an der Kommunikationsfrequenz, auf welcher diese Ausgabedaten über den Bus ankommen. Dies bedeutet, dass gemäß dieser Variante auch bei der Datenübertragung von den Slaves zum Master die Kommunikationsfrequenz die Funktion einer Kennung des Slaves erfüllt, nämlich in diesem Fall die Kennung, welcher Slave der Absender des betreffenden Ausgabedatensatzes ist. Eine Kennung in Form einer digitalen Slave-Adresse als Absender-Intentifikation braucht daher auch in den Ausgabedatensätzen nicht enthalten zu sein, wodurch weitere Systemkapazität freigesetzt wird.
   Die Sendephasen und die Ausgabephasen bzw. die Empfangsphasen überschneiden sich vorzugsweise zeitlich nicht; in diesem Fall können in den Sende- und Empfangsphasen die gleichen Kommunikationsfrequenzen verwendet werden. Bei unterschiedlichen Frequenzen der im Downlink und im Uplink kommunizierenden Partner können sich die Sende- und Ausgabephasen auch überschneiden.
[A5] Gemäß einer bevorzugten Variante des erfindungsgemäßen Verfahrens werden vom Master nur während der Sendephasen Sendedaten auf den Bus aufgegeben und nur während der Ausgabephasen Ausgabedatensätze empfangen, eingelesen und ggf. verarbeitet. Die Datensätze weisen so eine feste Rahmenstruktur auf.
[A18] Eine bevorzugte Ausführungsform des erfindungsgemäßen Bussystems zeichnet sich dadurch aus, dass der Master nur während der Sendephasen Sendedaten sendet und nur während der Ausgabephasen Ausgabedatensätze empfängt, einliest und ggf. verarbeitet.
[A17] Eine bevorzugte Variante des Bussystems zeichnet sich dadurch aus, dass
   - die Ausgabephasen aller Slaves der Gruppe sich zeitlich überlappen oder zusammenfallen, so dass Ausgabedatensätze von verschiedenen Slaves der Gruppe auf verschiedenen Kommunikationsfrequenzen zeitlich überlappend oder gleichzeitig auf den Bus gelangen und somit den Master zeitlich überlappend oder gleichzeitig erreichen,
   - wobei der Master imstande ist, Ausgabedatensätze von verschiedenen Slaves der Gruppe auf verschiedenen Kommunikationsfrequenzen zeitlich überlappend oder gleichzeitig zu empfangen, einzulesen und ggf. zu verarbeiten und jeden eingelesenen Ausgabedatensatz anhand der Kommunikationsfrequenz dieses Ausgabedatensatzes einem bestimmten Slave der Gruppe zuzuordnen und entsprechend zu interpretieren und zu verarbeiten.
[A4] Die Ausgabephasen aller Slaves der Gruppe können sich insbesondere zeitlich überlappen oder zusammenfallen, so dass Ausgabedatensätze von verschiedenen Slaves der Gruppe auf verschiedenen Kommunikationsfrequenzen zeitlich überlappend oder gleichzeitig auf den Bus aufgegeben werden und somit den Master zeitlich überlappend oder gleichzeitig erreichen, wobei der Master im Schritt e) Ausgabedatensätze von verschiedenen Slaves der Gruppe auf verschiedenen Kommunikationsfrequenzen zeitlich überlappend oder gleichzeitig empfängt, einliest und jeden eingelesenen Ausgabedatensatz anhand der
   Kommunikationsfrequenz dieses Ausgabedatensatzes einem bestimmten Slave der Gruppe zuordnet.
   Dies bedeutet, dass vorzugsweise die Slaves der Gruppe sich nicht, wie im Stand der Technik üblich, zeitlich nacheinander beim Master melden, sondern gleichzeitig oder zumindest zeitlich überlappend. Der Master kann somit erfindungsgemäß von jedem Slave der Gruppe parallel Ausgabedaten empfangen.
   Vorteilhafte Folge hiervon ist, dass für die Datenübertragung von den Slaves zum Master nicht nur, wie im Stand der Technik, pro Slave jeweils ein Bruchteil der Uplinkphase zur Verfügung steht, sondern dass mit Hilfe der Erfindung für die Datenübertragung von jedem Slave der Gruppe zum Master jeweils die gesamte Uplinkphase zeitlich ungeteilt zur Verfügung steht. Die pro Buszyklus von jedem der Slaves der Gruppe zum Master übertragbare Sendedatenmenge wird auf diese Weise vervielfacht.
   Alternativ hierzu kann bei gegenüber dem Stand der Technik gleicher pro Buszyklus zu übertragender Ausgabedatenmenge die Dauer der Uplinkphase auf einen Bruchteil verringert werden, wiederum mit dem Vorteil, dass auf diese Weise die Reaktionszeit des Bussystems nochmals erheblich verkürzt werden kann.
   Diese gravierende Verbesserung ist mit Hilfe der Erfindung möglich, weil erfindungsgemäß jeder Slave der Gruppe auf wenigstens einer eigenen, ihm im Schritt a) zugeordneten Kommunikationsfrequenz Ausgabedatensätze zum Master sendet und dieser die Absender aller Ausgabedatensätze anhand der Kommunikationsfrequenz, auf welcher die Ausgabedatensätze einlaufen, erkennt.
   Mit Hilfe der Erfindung können somit sowohl die Downlinkphasen als auch die Uplinkphasen, somit die Buszyklus-Periodendauer und damit insbesondere auch die Reaktionszeit des Bussystems ohne Einbuße an übertragbarer Datenmenge, oder sogar bei gesteigerter übertragbarer Datenmenge, drastisch verkürzt werden, was einen wesentlichem Vorteil der Erfindung darstellt.
   Mit Hilfe der Erfindung können auf diese Weise Buszyklus-Perioden von z.B. 1ms oder weniger realisiert werden, gegenüber typischerweise 5...10ms in herkömmlichen AS-i-Bussystemen. Dies bedeutet eine gegenüber dem Stand der Technik z.B. um einen Faktor 5...10 schnellere Reaktionszeit des erfindungsgemäßen Bussystems.
   Gemäß einer Variante der Erfindung mit weiter erhöhter Ausgabedatenübertragungs-Kapazität werden im Schritt a) jedem Slave der Gruppe zwei oder mehrere Kommunikationsfrequenzen zugeordnet, wobei jeder Slave der Gruppe an den Master Ausgabedatensätze parallel auf beiden oder mehreren diesem Slave zugeordneten Kommunikationsfrequenzen sendet, so dass also die Übertragung der Ausgabedatensätze zum Master auf jeweils zwei oder mehreren parallelen Kanälen erfolgt, deren jeder durch eine diesem Slave im Schritt a) zugeordnete Kommunikationsfrequenz charakterisiert ist. Mit anderen Worten: In jedem Buszyklus beinhaltet die Rahmenstruktur der Kommunikation eine Trainingsfrequenz, in der die Kanäle bzw. Frequenzen zwischen Master und Slave ausgehandelt werden.
   Gemäß einer Untervariante hiervon werden hierbei über alle vom Slave zum Master führenden derartigen parallelen Kanäle jeweils die gleichen Ausgabedatensätze übertragen, so dass auf diese Weise die Störsicherheit und die Zuverlässigkeit der Ausgabedatenübertragung erhöht werden.
   Gemäß einer anderen Untervariante werden über die vom Slave zum Master führenden derartigen parallelen Kanäle jeweils verschiedene Sendedaten übertragen, so dass auf diese Weise die Bitrate bzw. Datenübertragungsrate der Ausgabedatenübertragung erhöht wird.
   Gemäß einer Variante der Erfindung ist jeder Slave der Gruppe ausschließlich durch solche Sendedaten ansprechbar, welche auf einer ihm zugeordneten
   Kommunikationsfrequenz gesendet werden. Gemäß einer anderen Variante der Erfindung ist jeder Slave der Gruppe außerdem auch durch solche Sendedaten ansprechbar, welche auf einer bestimmten Zusatzfrequenz oder auf bestimmten Zusatzfrequenzen gesendet werden.
[A1] Gemäß einer Variante des erfindungsgemäßen Bussystems sind folgende Schritte ausführbar:
   h) der Master durchläuft wenigstens eine Konfigurations-Sendephase, in welcher er Konfigurationsdaten auf wenigstens einer bestimmten Konfigurationsfrequenz auf den Bus aufgibt,
   i) alle an den Bus angeschlossenen Slaves lesen die Konfigurationsdaten, welche im Schritt h) vom Master auf den Bus aufgegeben werden, ein und verarbeiten sie, so dass jeder an den Bus angeschlossene Slave vom Master durch die auf der Konfigurationsfrequenz oder auf den Konfigurationsfrequenzen übertragenen Konfigurationsdaten ansprechbar ist, wobei die Konfigurationsdaten solche Informationen enthalten, welche
      i1) die im Schritt a) vorgenommene Zuordnung zwischen den Slaves der Gruppe und den Kommunikationsfrequenzen löschen, falls der Schritt a) bereits ausgeführt wurde, und
      i2) jedem Slave einer anderen Gruppe von Slaves wenigstens eine Kommunikationsfrequenz zuordnen,
   k) der Schritt b) wird weiterhin ausgeführt,
   l) von jedem der Slaves der anderen Gruppe werden
      - solche Sendedaten eingelesen und verarbeitet, welche vom Master auf einer solchen Frequenz gesendet werden, die
         - der diesem Slave im Schritt i) zugeordneten mindestens einen Kommunikationsfrequenz entspricht,
      - und solche Sendedaten ignoriert oder verworfen, welche vom Master auf einer solchen Frequenz gesendet werden, die einer einem anderen Slave der anderen Gruppe zugeordneten mindestens einen Kommunikationsfrequenz entspricht,
      so dass jeder der Slaves der anderen Gruppe dadurch einzeln vom Master ansprechbar ist, dass der Master an den Slave Sendedaten auf wenigstens einer diesem zugeordneten Kommunikationsfrequenz über den Bus überträgt,
      so dass die Übertragung von Sendedaten vom Master zu jedem der Slaves der anderen Gruppe
      - auf der mindestens einen Kommunikationsfrequenz erfolgt, welche diesem Slave im Schritt i) zugeordnet worden ist.
[A6] Gemäß einer Variante der Erfindung werden folgende Verfahrensschritte ausgeführt:
   h) der Master durchläuft wenigstens eine Konfigurations-Sendephase, in welcher er Konfigurationsdaten auf wenigstens einer bestimmten Konfigurationsfrequenz auf den Bus aufgibt,
   i) von allen an den Bus angeschlossenen Slaves werden die Konfigurationsdaten, welche im Schritt h) vom Master auf den Bus aufgegeben werden, eingelesen und verarbeitet, so dass jeder an den Bus angeschlossene Slave vom Master durch die auf der Konfigurationsfrequenz oder auf den Konfigurationsfrequenzen übertragenen Konfigurationsdaten ansprechbar ist,
      wobei die Konfigurationsdaten solche Informationen enthalten, welche
      i1) die im Schritt a) vorgenommene Zuordnung zwischen den Slaves der Gruppe und den Kommunikationsfrequenzen löschen, falls der Schritt a) bereits ausgeführt wurde, und
      i2) jedem Slave einer anderen Gruppe von Slaves wenigstens eine Kommunikationsfrequenz zuordnen.
   k) der Schritt b) wird weiterhin ausgeführt,
   l) von jedem der Slaves der anderen Gruppe werden
      - solche Sendedaten eingelesen und verarbeitet, welche vom Master auf einer solchen Frequenz gesendet werden, die
         - der diesem Slave im Schritt i) zugeordneten mindestens einen Kommunikationsfrequenz entspricht,
         - und solche Sendedaten ignoriert oder verworfen, welche vom Master auf einer solchen Frequenz gesendet werden, die einer einem anderen Slave der anderen Gruppe zugeordneten mindestens einen Kommunikationsfrequenz entspricht,
      so dass jeder der Slaves der anderen Gruppe dadurch einzeln vom Master ansprechbar ist, dass der Master an den Slave Sendedaten auf wenigstens einer diesem zugeordneten Kommunikationsfrequenz über den Bus überträgt,
      so dass die Übertragung von Sendedaten vom Master zu jedem der Slaves der anderen Gruppe
      - auf der mindestens einen Kommunikationsfrequenz erfolgt, welche diesem Slave im Schritt i) zugeordnet worden ist.

   Der Schritt i1) bedeutet, dass der Schritt a), falls er bereits für eine Gruppe von Slaves ausgeführt worden ist, rückgängig gemacht wird, wodurch diese Gruppe "passiv" wird. Falls der Schritt a) noch nicht ausgeführt wurde und somit keine Zuordnung zwischen Slaves und Kommunikationsfrequenzen vorliegt, ist der Schritt i1) überflüssig; er wird dann vorzugsweise weggelassen.
   Der Schritt i2) bedeutet, dass der Schritt a) nun für die andere Gruppe von Slaves ausgeführt wird, wodurch diese andere Gruppe "aktiv" wird.
[A7, A20] Die Konfigurationsdaten können insbesondere solche Informationen enthalten, welche jeden Slave einer Gruppe von Slaves zuordnen.
   Bevorzugt ist der Master imstande, solche Konfigurationsdaten auf den Bus aufzugeben, welche jedem Slave jeder Gruppe wenigstens eine Kommunikationsfrequenz zuordnen.
[A8] Es kann insbesondere folgender weiterer Verfahrensschritt ausgeführt werden:
   o) vom Master werden solche Konfigurationsdaten auf den Bus aufgegeben, welche jedem Slave jeder Gruppe wenigstens eine Kommunikationsfrequenz zuordnen, so dass auf diese Weise der Schritt a) für alle Gruppen ausgeführt wird.
[A9] Bevorzugt wird keinen zwei Slaves derselben Gruppe die gleiche Kommunikationsfrequenz zugeordnet, d.h., bevorzugt wird jede Kommunikationsfrequenz, die einem Slave einer Gruppe zugeordnet wird, keinem anderen Slave der gleichen Gruppe zugeordnet.
[A22] Bevorzugt ist keinen zwei Slaves derselben Gruppe die gleiche Kommunikationsfrequenz zugeordnet.
[A23] Gemäß einer bevorzugten Ausführungsform des erfindungsgemäßen Bussystems ist der Master imstande, solche Konfigurationsdaten auf den Bus aufzugeben, welche eine der Gruppen aktiv schalten, so dass die Slaves dieser Gruppe über die Kommunikationsfrequenzen, welche den Slaves dieser Gruppe zugeordnet sind, ansprechbar sind, und die übrigen Gruppen passiv schalten, so dass die Slaves dieser Gruppen nicht über Kommunikationsfrequenzen ansprechbar sind.
[A10] Gemäß einer bevorzugten Variante des erfindungsgemäßen Verfahrens wird folgender Verfahrensschritt ausgeführt:
   p) vom Master werden solche Konfigurationsdaten auf den Bus aufgegeben, welche eine der Gruppen aktiv schalten, so dass die Slaves dieser Gruppe über die Kommunikationsfrequenzen, welche den Slaves dieser Gruppe zugeordnet sind, ansprechbar sind, und die übrigen Gruppen passiv schalten, so dass die Slaves dieser Gruppen nicht über Kommunikationsfrequenzen ansprechbar sind.

   Die Konfigurationsdaten können solche Informationen enthalten, welche jeder Gruppe von Slaves eine eigene Zusatzfrequenz zuordnen.
[A11] Gemäß einer Variante der Erfindung wird als Bussystem ein AS-i-Bussystem oder ein sonstiges Zweidraht-Bussystem verwendet, so dass über
   den Bus sowohl der Datenverkehr zwischen dem Master und den Slaves der Gruppe übertragen wird als auch die Spannungsversorgung des Masters und der an den Bus angeschlossenen Slaves erfolgt.
[A24] Bevorzugt ist das Bussystem ein AS-i-Bussystem oder ein sonstiges Zweidraht-Bussystem, so dass über den Bus sowohl der Datenverkehr zwischen dem Master und den Slaves als auch die Spannungsversorgung des Masters und der an den Bus angeschlossenen Slaves erfolgt. Zur Signalübertragung wird vorzugsweise OFDM bzw. deren Basisvariante DMT verwendet. Durch die differentielle Modulation lassen sich besonders viele Kommunikationskanäle gleichzeitig aufbauen.
[A12] Gemäß einer sehr vorteilhaften Variante des erfindungsgemäßen Kommunikationsverfahrens
   - werden jedem Slave der Gruppe oder jedem Slave wenigstens einer Gruppe je wenigstens zwei Kommunikationsfrequenzen zugeordnet,
   - wobei der Master mit jedem Slave der Gruppe in bestimmten Zeitabständen auf den diesem Slave zugeordneten Kommunikationsfrequenzen je eine Testkommunikation durchführt, mittels welcher er für jede dem Slave zugeordnete Kommunikationsfrequenz das zugehörige Signal-/Rauschverhältnis oder die zugehörige Bitfehlerrate bestimmt,
   - und wobei der Master anschließend mit dem Slave auf derjenigen Kommunikationsfrequenz kommuniziert, für weiche das höchste Signal-/Rausch-Verhältnis oder die niedrigste Bitfehlerrate bestimmt wurde.

   Wie oben bereits dargelegt, kann sich die Datenübertragungsqualität, welche bei der Kommunikation auf einer Kommunikationsfrequenz vorliegt, z.B. auf Grund von sich ändernden Umgebungsbedingungen zeitlich ändern. Die letztgenannte Variante des erfindungsgemäßen Verfahrens ermöglicht es, bei der Kommunikation des Masters mit den Slaves jeweils zwischen verschiedenen Kommunikationsfrequenzen umzuschalten, je nachdem, welche der dem jeweiligen Slave zugeordneten Kommunikationsfrequenzen gerade die beste Datenübertragungsqualität gewährleistet.
[A25] Gemäß einer sehr vorteilhaften Ausführungsform des Bussystems
   - ist jedem Slave der Gruppe oder jedem Slave wenigstens einer Gruppe je wenigstens zwei Kommunikationsfrequenzen zugeordnet,
   - wobei der Master imstande ist, mit jedem Slave der Gruppe in bestimmten Zeitabständen auf den diesem Slave zugeordneten Kommunikationsfrequenzen je eine Testkommunikation durchzuführen, mittels welcher er für jede dem Slave zugeordnete Kommunikationsfrequenz das zugehörige Signal-/Rauschverhältnis oder die zugehörige Bitfehlerrate bestimmt,
   - und wobei der Master imstande ist, anschließend mit dem Slave auf derjenigen Kommunikationsfrequenz zu kommunizieren, für welche das höchste Signal-/Rausch-Verhältnis oder die niedrigste Bitfehlerrate bestimmt wurde.

Kurzbeschreibung der Zeichnung, in welcher anhand von Ausführungsformen der Erfindung schematisch zeigen:
- Figur 1: eine zeitliche Struktur eines Sendesignals,
- Figur 2: ein vereinfachtes funktionelles Blockschaltbild eines Masters,
- Figur 3: ein vereinfachtes funktionelles Blockschaltbild eines Slaves,
- Figur 4: ein Bussystem, welches mit dem erfindungsgemäßen Kommunikationsverfahren betreibbar ist,
- Figur 5: ein Beispiel für eine spektrale Verteilung von Kommunikationsfrequenzen, wobei auch eine Zusatzfrequenz eingezeichnet ist,
- Figur 6: ein gegenüber dem Bussystem von Figur 4 erweitertes Bussystem, und
- Figur 7: die spektrale Verteilung von Kommunikationsfrequenzen von Figur 6, wobei zusätzlich eine Konfigurationsfrequenz eingezeichnet ist.

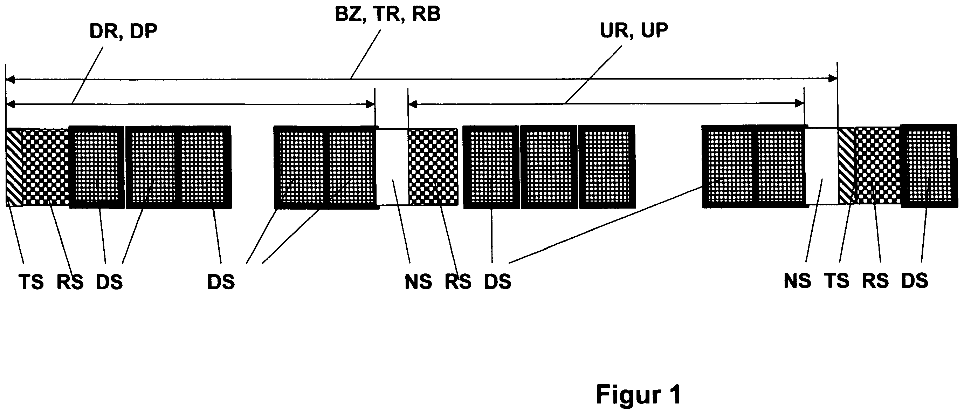

Das Kommunikationssystem für die Automatisierungstechnik basiert auf einer Zentrale, dem Master M, und mehreren Teilnehmern, den Slaves 1, 2, 3. Die zeitliche Struktur des Sendesignals dieses Systems ist gemäß Figur 1 aufgebaut. Der Zeitrahmen der Kommunikation, der sich aus dem Buszyklus BZ ergibt, wird vom Übertragungsrahmen RB mit der Dauer TR bestimmt, die typisch 1 ms beträgt. Dieser wird vom Master synchronisiert und vorgegeben. Er gliedert sich in einen Downlink-Rahmen DL und einen Uplink-Rahmen UR. Jeder Übertragungsrahmen beginnt mit einer Trainingssequenz TS, die der Synchronisierung und dem Aushandeln der Kanäle dient, gefolgt von einem Referenzsymbol RS um die Datenübertragung anzukündigen. Auf das Referenzsymbol RS folgen die gesendeten Datensymbole DS. Zur Trennung wird zwischen Downlink-Rahmen DL und Uplink-Rahmen UR ein Nullsymbol NS gesendet. Der darauf folgende Downlink-Rahmen DL beginnt wieder mit einem Referenzsymbol RS und schließt nach Sendung der Datensymbole DS mit einem Nullsymbol NS ab, womit auch der Übertragungsrahmen RB abschlossen ist. Anschließend beginnt mit der Trainingssequenz TS ein weiter Übertragungsrahmen RB, wie dies in Figur 1 dargestellt ist.

Der Master M spricht während der Downlinkphase DP alle Slaves parallel mit individuellen Daten an und alle Slaves antworten parallel während der Uplinkphase UP mit wiederum individuellen Daten. Für die Datenübertragung der Punkt-zu-Multipunkt-Verbindung von und zu allen Slaves wird als Modulationsvertahren ein orthogonales Multiplexverfahren genutzt (OFDM entspricht Orthogonal Frequency-Division Multiplexing), bzw. deren Basisbandvariante Discrete Multitone Transmission (DMT), verwendet. Hierbei wird der Frequenzbereich in Unterträger aufgeteilt, deren Teilspektren sich überlappen, jedoch zueinander orthogonal stehen und sich somit gegenseitig nicht stören. Jeder Slave bekommt einen oder mehrere Unterträger für die Kommunikation mit dem Master zugewiesen, wodurch der Master alle Slaves gleichzeitig individuell ansprechen kann und die Slaves ebenso gleichzeitig und individuell antworten können.

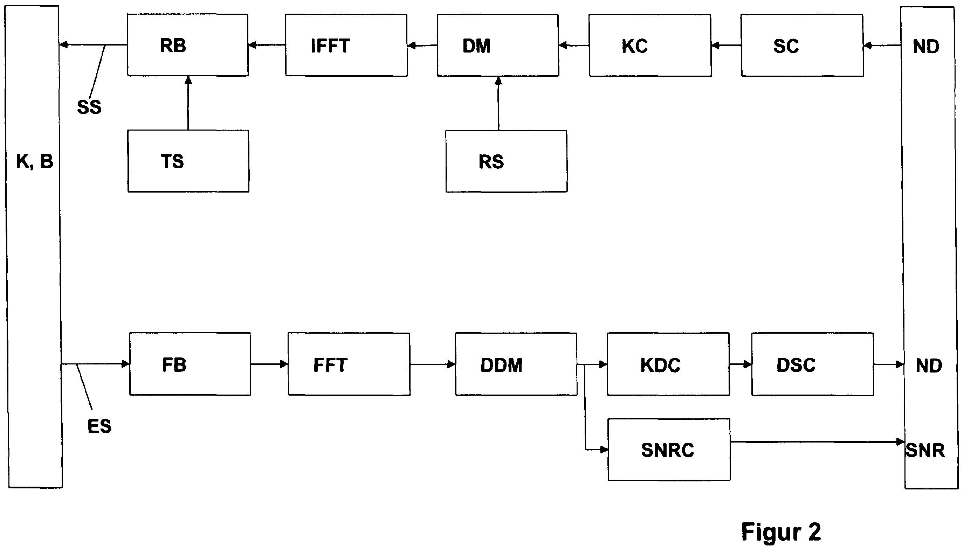

In Figur 2 ist ein vereinfachtes funktionelles Blockschaltbild der physikalischen Schicht eines Masters dargestellt. Der Datenfluss im Sendeteil ist oben, der des Empfangsteils unten dargestellt. Links wird die physikalische Schicht durch das Buskabel K begrenzt und rechts durch gerätespezifische Komponenten.

Der obere Signalfluss der Nutzdaten ND durchläuft von rechts nach links die Blöcke Scrambler SC, Kanal-Codierer KC, Differentielle Modulation DM, inverse Fast-Fourier-Transformation IFFT und Übertragungsrahmen RB, bevor er als Sendesignal SS das Kabel B erreicht. In den Block zur Bildung des Übertragungsrahmens RB mündet noch das Signal des Blocks TS zur Bildung der Trainingssequenz. Beim Master wird zu Beginn des Übertragungsrahmens also eine Trainingssequenz eingefügt, so dass die Slaves den Beginn eines Rahmens detektieren können. Ein weiterer Block RS dient der Bildung des Referenzsymbols RS, dessen Signalweg in den Block DM der Differenziellen Modulation mündet. Dieser Signalfluss bestimmt somit den Downlink-Rahmen.

Während der Uplink-Phase UP passiert der Signalverlauf des Empfangssignals ES von links nach rechts, das heißt vom Kabel B kommend, die Blöcke Fensterung FB, Fast-Fourier-Transformation FFT, Differenzielle Demodulation DDM, Kanal-Decodierer KDC, Descrambler DSC, um die Nutzdaten ND dann weitergeben zu können. Nach der Differenziellen Demodulation zweigt der Signalfluss in den Block SNRS zur SNR-Schätzung ab, die zur Kanalzuordnung, wie vorher beschrieben, verarbeitet wird.

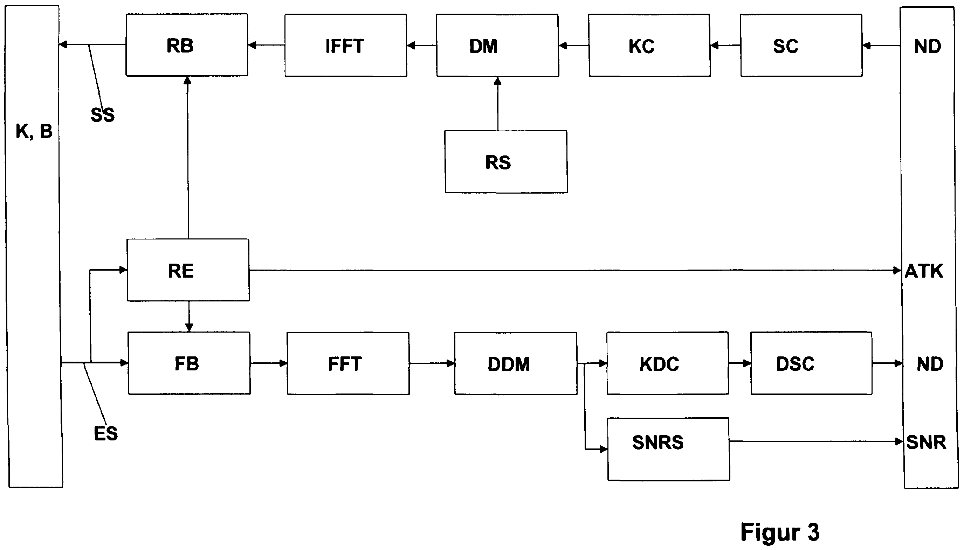

Der Aufbau des Slaves gemäß Figur 3 ist nahezu identisch mit dem des Masters. Beim Slave entfällt der Block zur Bildung der Trainingssequenz. Zusätzlich wird ein Block RE zur Rahmenerkennung benötigt, damit der Slave die Rahmen detektieren kann und um eine Abtasttaktkorrektur ATK vornehmen zu können. Wurde der Beginn eines Rahmens erkannt, so wird das Empfangssignal ES mit Hilfe einer im Block FFT erfolgenden Fast-Fourier-Transformatian in den Frequenzbereich transformiert. Die empfangenen und verrauschten Daten der Unterträger werden dann im Block DDM differentiell demoduliert und mit Hilfe der im Block KDC stattfindenten Kanaldecodierung zugeordnet. Parallel dazu wird mittels Block SNRS das Signal-Rausch-Verhältnis SNR des jeweiligen Unterträgers fortlaufend geschätzt, wodurch erkannt werden kann, ob der Unterträger noch verwendet werden kann oder ob ein neuer ausgehandelt werden muss. Im Sender werden die codierten Bitfolgen aller Unterträger im Block DM differentiell moduliert (DQPSK), mit der IFFT in den Zeitbereich transformiert und im entsprechenden Zeitschlitz gesendet.

Bislang wurde das Verfahren der OFDM in der Automatisierungstechnik aufgrund des rauen Umfeldes, der sehr geringen geforderten Restfehlerwahrscheinlichkeit, d.h. die Zahl der Bitfehler, die unerkannt bleibt, und der harten Echtzeitanforderungen nicht angewandt. Durch die gewählte Rahmenstruktur und die effizienten Fehlerschutzmechanismen ist es jedoch gelungen, diese Forderungen einzuhalten. Durch das Voranstellen einer geeigneten Trainingssequenz kann sichergestellt werden, dass die Slaves sich stets auf die vom Master vorgegebene Zeitintervalle synchronisieren. Durch die differentielle Modulation kann auf eine aufwändige und träge Kanalschätzung verzichtet werden und das System reagiert sofort auf sich ändernde Kanalbedingungen, z.B. durch Anschließen eines neuen Slaves im Betrieb. Das demodulierte Signal wird decodiert, wobei auch mittels einer Metrik eine Qualitätskennzahl berechnet wird, die angibt, mit welcher Wahrscheinlichkeit die decodierte Bitfolge korrekt ist.

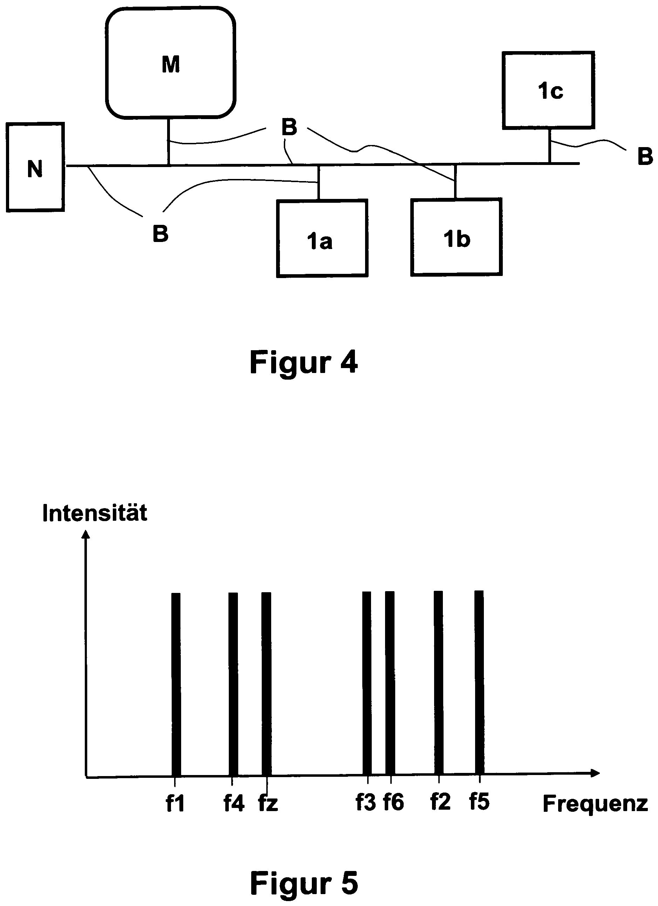

Figur 4 zeigt ein Bussystem, welches mit dem erfindungsgemäßen Kommunikationsverfahren betreibbar ist, mit einem Bus B, einem Master M, einem Netzgerät N und einer Gruppe von Slaves 1. Der Bus B ist ein Zweidraht-Bus mit Verzweigungen. Das Netzgerät N, der Master M und die Slaves 1a, 1b, 1c sind alle parallel an den Bus B angeschlossen. Über den Bus B werden der Master M und die Slaves 1a,1b,1c mit Betriebsspannung versorgt, welche vom Netzgerät N geliefert und in den Bus B eingespeist wird. Der Bus B dient ferner auch zur Datenkommunikation zwischen dem Master M und den Slaves 1a,1b,1c. Die unter Bezug auf Figur 1 beschriebene Variante des erfindungsgemäßen Kommunikationsverfahrens dient zum Austausch von Daten zwischen dem Master M und der Gruppe 1a,1b,1c von Slaves. Diese Struktur entspricht auch der des herkömmlichen AS-i-Bussystems.

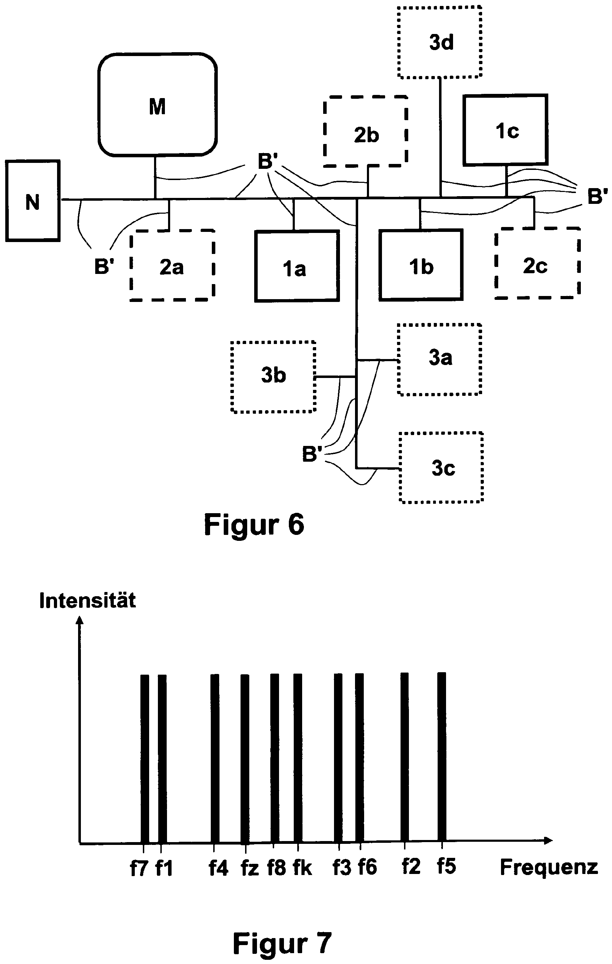

Die Schaltungen von Fig. 4 und Fig. 6 dienen der Erläuterung, wie auf der Struktur das erfindungsgemäße Kommunikationsverfahren abläuft. Die Struktur kann auch in bestehende herkömmliche Bussysteme eingebunden werden bzw. mit denen gemischt und in erfindungsgemäßer Weise betrieben werden.

Jedem Slave 1a,1b,1c der Gruppe von Slaves werden im vorliegenden Beispiel mindestens zwei Kommunikationsfrequenzen zugeordnet. Hierbei werden jedem Slave 1a,1b,1c der Gruppe andere Kommunikationsfrequenzen zugeordnet, d.h. keine Kommunikationsfrequenz wird zwei verschiedenen Slaves zugleich zugeordnet.

Der Master M durchläuft nun Sendephasen, während welcher er verschiedene Sendedaten auf verschiedenen Kommunikationsfrequenzen auf den Bus B aufgibt.

Von jedem Slave der Gruppe werden solche Sendedaten eingelesen und verarbeitet, welche der Master M auf einer solchen Frequenz auf den Bus B aufgibt, die einer der diesem Slave zugeordneten Kommunikationsfrequenzen entspricht.

Hingegen ignoriert oder verwirft jeder Slave der Gruppe solche Sendedaten, welche vom Master M auf einer solchen Frequenz auf den Bus B aufgegeben werden, die einer einem anderen Slave der Gruppe zugeordneten Kommunikationsfrequenz entspricht.

Die Sendedaten können insbesondere Befehle enthalten, so dass dann jeder Slave 1a,1b,1c solche Befehle ausführt, welche vom Master M auf einer solchen Frequenz auf den Bus B aufgegeben werden, die einer der diesem Slave zugeordneten Kommunikationsfrequenzen entspricht, und solche Befehle nicht ausführt, welche vom Master M auf einer solchen Frequenz auf den Bus B aufgegeben werden, die einer einem anderen Slave der Gruppe zugeordneten Kommunikationsfrequenz entspricht.

Auf diese Weise ist jeder Slave 1a,1b,1c der Gruppe dadurch einzeln vom Master M ansprechbar, dass der Master M an den Slave Sendedaten auf wenigstens einer der diesem zugeordneten Kommunikationsfrequenzen über den Bus B überträgt, so dass die Übertragung von Sendedaten vom Master M zu jedem der Slaves 1a,1b,1c der Gruppe auf wenigstens einer derjenigen Kommunikationsfrequenzen erfolgt, welche diesem Slave zugeordnet worden sind.

Die Vornahme der Zuordnung zwischen den Slaves 1a,1b,1c der Gruppe und den Kommunikationsfrequenzen kann z.B. dadurch erfolgen, dass die Slaves 1a,1b,1c entsprechend programmiert werden, bevor sie an den Bus B angeschlossen werden.

Gemäß einer anderen, bevorzugten Variante durchläuft der Master M zur Vornahme der Zuordnung zwischen den Slaves 1a,1b,1c der Gruppe und den Kommunikationsfrequenzen wenigstens eine Zusatz-Sendephase, in welcher von ihm Zusatz-Sendedaten auf einer bestimmten Zusatzfrequenz auf den Bus B aufgegeben werden, wobei die Zusatz-Sendedaten von allen Slaves 1a,1b,1c der Gruppe eingelesen und verarbeitet werden, so dass alle Slaves 1a,1b,1c der Gruppe vom Master M durch die auf der Zusatzfrequenz übertragenen Zusatz-Sendedaten ansprechbar sind, auch wenn diesen Slaves noch keine Kommunikationsfrequenz zugeordnet worden ist. Die Zusatz-Sendedaten enthalten Informationen, welche jedem Slave 1a,1b,1c der Gruppe im vorliegenden Beispiel mindestens je zwei eigene Kommunikationsfrequenzen zuordnen, nämlich dem Slave 1a die Kommunikationsfrequenzen f1 und f2, dem Slave 1b die Kommunikationsfrequenzen f3 und f4 und dem Slave 1c die Kommunikationsfrequenzen f5 und f6 (Figur 5). Diese Frequenzen können beispielsweise im MHz-Bereich liegen. Die ausgehandeten Frequenzen werden vom Master in einer Look-Up-Tabelle (vgl. Tabelle 1) verwaltet, damit eine eindeutige Zuordnung der Figuren zum Slave erhalten bleibt. Beispielsweise kann jede uns die Tabelle neu erstellt werden.

Figur 5 zeigt ein Beispiel für die spektrale Verteilung der auf diese Weise den Slaves 1a,1b,1c von Figur 1 zugeordneten Kommunikationsfrequenzen f1-f6. Ferner ist auch die oben unter Bezug auf Figur 4 erläuterte Zusatzfrequenz beispielhaft in das Frequenzspektrum von Figur 2 eingetragen.

Tabelle 1 gibt die Zuordnung zwischen den Slaves 1a,1b,1c und den Kommunikationsfrequenzen f1,f2,f3,f4,f5 und f6an:

**Tabelle 1**

| Slave | Kommunikationsfrequenz 1 | Komm unikationsfrequenz 2 |
|---|---|---|
| 1a | f1 | f2 |
| 1b | f3 | f4 |
| 1c | f5 | f6 |

Vorzugsweise wird vorgegangen wie folgt:
Der Master führt in bestimmten Zeitabständen mit dem ersten Slave 1a auf den beiden diesem Slave zugeordneten Kommunikationsfrequenzen f1,f2 je eine Test-Kommunikation durch. Zu jeder Test-Kommunikation wird das zugehörige Signal-/Rausch-Verhältnis oder die zugehörige Bitfehlerrate bestimmt. Anschließend kommuniziert der Master mit dem Slave 1a auf derjenigen der beiden Kommunikationsfrequenzen f1,f2, mit welcher das bessere Signal-/Rausch-Verhältnis bzw. die geringere Bitfehlerrate erzielt wurde. Dies bedeutet, bei sich ändernden Signal-/Rauschverhältnissen bzw. Bitfehlerraten wird ggf. wird für den Datenverkehr vom Master M zum Slave 1a zwischen den Frequenzen f1 und f2 umgeschaltet. Diese Vorgehensweise wird für die übrigen Slaves 1b,1c der Gruppe und die diesen jeweils zugeordneten Kommunikationsfrequenzen f3,f4 bzw. f5,f6 entsprechend ebenso durchgeführt.

Figur 6 zeigt ein Bussystem, welches gegenüber demjenigen von Figur 1 um zwei weitere Gruppen von Slaves 2a,2b,2c und 3a,3b,3c,3d erweitert ist. Der Bus B' des Bussystems von Figur 3 ist gegenüber dem Bus B von Figur 1 um die Zuleitungen zu den Slaves 2a,2b,2c, 3a,3b,3c,3d erweitert.

In dem in Figur 6 gezeigten Beispiel ist die Gruppe der Slaves 1a,1b,1c, nachfolgend als "erste Gruppe" bezeichnet, aktiv, während die Gruppe der Slaves 2a,2b,2c, nachfolgend als "zweite Gruppe" bezeichnet, und ebenso die Gruppe der Slaves 3a,3b,3c,3d, nachfolgend als "dritte Gruppe" bezeichnet, passiv sind.

Hierbei wird eine Gruppe als "aktiv" bezeichnet, wenn die Slaves dieser Gruppe auf wenigstens einer Kommunikationsfrequenz vom Master M ansprechbar sind, und einer Gruppe wird als "passiv" bezeichnet, wenn die Slaves dieser Gruppe über keine Kommunikationsfrequenz vom Master M ansprechbar sind.

Gemäß einer bevorzugten Variante des erfindungsgemäßen Kommunikationsverfahrens durchläuft der Master M wenigstens eine Konfigurations-Sendephase, in welcher er Konfigurationsdaten auf einer bestimmten Konfigurationsfrequenz auf den Bus aufgibt. Von allen an den Bus B' angeschlossenen Slaves 1a,1b,1c, 2a,2b,2c, 3a,3b,3c,3d, egal ob sie zu einer aktiven oder zu einer passiven Gruppe gehören, d.h. von allen Slaves aller Gruppen, werden die Konfigurationsdaten eingelesen und verarbeitet, so dass jeder an den Bus B' angeschlossene Slave 1a,1b,1c, 2a,2b,2c, 3a,3b,3c,3d vom Master M durch die auf der Konfigurationsfrequenz übertragenen Konfigurationsdaten ansprechbar ist, wobei die Konfigurationsdaten solche Informationen enthalten, welche die Slaves 1a,1b,1c der ersten Gruppe, die Slaves 2a,2b,2c der zweiten Gruppe und die Slaves 3a,3b,3c,3d der dritten Gruppe von Slaves zuordnen.

Die vom Master M auf den Bus B' aufgegebenen Konfigurationsdaten enthalten ferner solche Informationen, welche jedem Slave jeder Gruppe mindestens zwei Kommunikationsfrequenzen zuordnen. Hierbei werden den Slaves 1a,2a,3a jeweils die beiden Kommunikationsfrequenzen f1 und f2, den Slaves 1b,2b,3b jeweils die beiden Kommunikationsfrequenzen f3 und f4, den Slaves 1c,2c,3c jeweils die beiden Kommunikationsfrequenzen f5 und f6 und dem Slave 3d die Kommunikationsfrequenzen f7 und f8 zugeordnet.

Tabelle 2 gibt die Zuordnung zwischen den Slaves 1a,1b,1c, 2a,2b,2c, 3a,3b,3c,3d und den Kommunikationsfrequenzen f1,f2,f3,f4,f5,f6,f7 und f8 an:

**Tabelle 2**

| Gruppe | Slave | Kommunikationsfrequenz 1 | Kommunikationsfrequenz 2 |
|---|---|---|---|
| erste Gruppe | 1a | f1 | f2 |
| | 1b | f3 | f4 |
| | 1c | f5 | f6 |
| zweite Gruppe | 2a | f1 | f2 |
| | 2b | f3 | f4 |
| | 2c | f5 | f6 |
| dritte Gruppe | 3a | f1 | f2 |
| | 3b | f3 | f4 |
| | 3c | f5 | f6 |
| | 3d | f7 | f8 |

Hierbei werden innerhalb jeder Gruppe jedem Slave dieser Gruppe andere Kommunikationsfrequenzen zugeordnet, d.h. keine Kommunikationsfrequenz wird innerhalb der gleichen Gruppe zwei verschiedenen Slaves zugleich zugeordnet. Somit kommt innerhalb einer Gruppe keine Kommunikationsfrequenz zwei- oder mehrfach vor. Jedoch werden den Slaves 1a,2a,3a jeweils die gleichen Kommunikationsfrequenzen f1 und f2 zugeordnet. Ebenso werden den Slaves 1b,2b,3b jeweils die gleichen Kommunikationsfrequenzen f3 und f4 zugeordnet und ebenso den Slaves 1c,2c,3c jeweils die gleichen Kommunikationsfrequenzen f5 und f6 zugeordnet. Jede Kommunikationsfrequenz kommt also innerhalb jeder Gruppe genau einmal vor (Tabelle 2).

Die Kommunikationsfrequenzen f7,f8 werden nur dem Slave 3d und keinem Slave einer anderen Gruppe zugeordnet.

Die Konfigurationsdaten enthalten des weiteren solche Informationen, welche eine der Gruppen aktiv schalten, so dass die Slaves dieser Gruppe über die Kommunikationsfrequenzen, welche den Slaves dieser Gruppe zugeordnet sind, ansprechbar sind, und die übrigen Gruppen passiv schalten, so dass die Slaves dieser Gruppen nicht über Kommunikationsfrequenzen ansprechbar sind.

Von jedem Slave der aktiven Gruppe werden solche Sendedaten eingelesen und verarbeitet, welche der Master M auf einer solchen Frequenz auf den Bus B' aufgibt, die einer der diesem Slave zugeordneten Kommunikationsfrequenzen entspricht. Hingegen ignoriert oder verwirft jeder Slave der aktiven Gruppe solche Sendedaten, welche vom Master M auf einer solchen Frequenz auf den Bus B' aufgegeben werden, die einer einem anderen Slave der aktiven Gruppe zugeordneten Kommunikationsfrequenz entspricht. Ebenso ignoriert oder verwirft jeder Slave jeder passiven Gruppe alle Sendedaten, welche vom Master M auf irgend einer Kommunikationsfrequenz auf den Bus B' aufgegeben werden.

Mit der aktiven Gruppe wird vorzugsweise ebenso vorgegangen wie oben unter Bezug auf die Figuren 1 und 2 beschrieben; insbesondere wird bei Bedarf auch zwischen Kommunikationsfrequenzen umgeschaltet.

Figur 7 zeigt ein Beispiel für die spektrale Verteilung der auf diese Weise den Slaves 1a,1b,1c,2a,2b2c,3a,3b,3c,3d von Figur 3 zugeordneten Kommunikationsfrequenzen f1-f8. Ferner ist auch die oben unter Bezug auf Figur 6 erläuterte Konfigurationsfrequenz fk beispielhaft in das Frequenzspektrum von Figur 7 eingetragen.

Gemäß einer Variante der Erfindung wird auch die oben unter Bezug auf die Figuren 1 und 2 erläuterte Zusatzfrequenz fz beim Betrieb des Bussystems von Figur 6 benützt. Gemäß dieser Variante enthalten die Konfigurationsdaten ferner solche Informationen, welche die Slaves einer der Gruppen von Slaves, z.B.die aktive Gruppe, in die Lage versetzen, vom Master M auf der Zusatzfrequenz auf den Bus B' aufgegebene Daten einzulesen und zu verarbeiten, und die Slaves aller anderen Gruppen, z.B. aller passiven Gruppen, so zu beeinflussen, dass diese Slaves alle Daten, welche der Master M auf der Zusatzfrequenz auf den Bus B' aufgibt, ignorieren oder verwerfen. Auf diese Weise können auf der Zusatzfrequenz gesandte Daten dazu dienen, Slaves gruppenweise anzusprechen.

Gemäß einer anderen Variante sind die Zusatzfrequenz und die Konfigurationsfrequenz miteinander identisch, wobei sich alle Slaves aller Gruppen durch auf dieser Frequenz gesandte Daten jederzeit ansprechen lassen.

Gewerbliche Anwendbarkeit:
Die Erfindung ist gewerblich anwendbar z.B. im Bereich der Prozessautomation, der Fabrikautomation, der Steuerung und Überwachung von Anlagen und der Robotik. Die bisherige Beschränkung eines As-Bussystems auf 4 bit-Worte wird aufgehoben. Erfindungsgemäß kann die Wortbreite 64 bit betragen. Ein Träger kann in 4 zeitlichen Gruppen nacheinander 32 Slaves ansprechen.

Für den Broadcast stehen 20 Träger zur Verfügung, was eine 5-fache Redundanz bedeutet, und 64 Träger für eine Gruppe Slaves, d. h. 2 Träger pro Slave. Damit ist eine ausreichende Redundanz gesichert, um eine für die Automation notwendige verlässliche Kommunikation zu ermöglichen. Die Kommunikation erfolgt bei Frequenzen > 1 bis 7 MHz. Darüber hinaus steigen die Verluste und die Störungen nehmen zu. Die Frequenzen unter 1 MHz nutzen herkömmliche ASi-Bussysteme.

### Liste der Bezugszeichen:

- 1a,1b,1c: Slaves
- 2a,2b,2c: Slaves
- 3a,3b,3c,3d: Slaves
- B: Bus
- B': Bus
- f1,f2,f3,f4,f5,f6,f7,f8: Kommunikationsfrequenzen
- fk: Konfigurationsfrequenz
- fz: Zusatzfrequenz
- ATK: Abtasttaktkorrektur
- BZ: Buszyklus
- DDM: Differenzielle Demodulation
- DM: Differentielle Modulation
- DP: Downlinkphase
- DR: Downlink-Rahmen
- DS: Datensymbole
- DSC: Descrambler
- ES: Empfangssignal
- FB: Fensterung
- FFT: Fast-Fourier-Transformation,
- IFFT: inverse Fast-Fourier-Transformation
- K: Kabel
- KC: Kanal-Codierer
- KDC: Kanal-Decodierer
- M: Master
- N: Netzgerät
- ND: Nutzdaten
- NS: Nullsymbol
- RB: Übertragungsrahmen
- RE: Rahmenerkennung
- RS: Referenzsymbol
- SC: Scrambler
- SNR: Signal-Rausch-Verhältnis
- SNRS: SNR-Schätzung
- SS: Sendesignal
- TR: Dauer
- TS: Trainingssequenz
- UP: Uplinkphase
- UR: Uplink-Rahmen

## Patentansprüche

1. Kommunikationsverfahren, insbesondere für die Automation, zum Austausch von Daten zwischen einem Master (M) und wenigstens einer Gruppe von über einen Bus (B, B') parallel an den Master (M) angeschlossenen Slaves (1a,1b,1c, 2a, 2b, 2c, 3a, 3b, 3c, 3d) in einem den Master (M), die Slaves und den Bus (B, B') umfassenden Bussystem, mit den folgenden Schritten:
a) jedem Slave der Gruppe wird wenigstens eine
Kommunikationsfrequenz (f1, f2, f3, f4, f5, f6, f7, f8) zugeordnet,
b) der Master (M) durchläuft Sendephasen, während welcher er verschiedene Sendedaten auf verschiedenen Kommunikationsfrequenzen auf den Bus (B, B') aufgibt,
c) von jedem Slave der Gruppe werden
solche Sendedaten eingelesen und verarbeitet, welche vom Master (M) auf einer solchen Frequenz auf den Bus (B, B') aufgegeben werden, die der diesem Slave im Schritt a) zugeordneten wenigstens einen Kommunikationsfrequenz entspricht,
und solche Sendedaten ignoriert oder verwirft, welche vom Master (M) auf einer solchen Frequenz auf den Bus (B, B') aufgegeben werden, die nicht mindestens einer seiner zugeordneten Kommunikationsfrequenz entspricht, **dadurch gekennzeichnet, dass**
m) der Master (M) wenigstens eine Konfigurations-Sendephase durchläuft, in weicher er Konfigurationsdaten auf wenigstens einer bestimmten Konfigurationsfrequenz (fk) auf den Bus (B, B') aufgibt, wobei
n) von allen an den Bus (B, B') angeschlossenen Slaves (1a,1b,1c,2a,2b, 2c, 3a, 3b, 3c, 3d) die Konfigurationsdaten, welche im Schritt m) vom Master (M) auf den Bus (B, B') aufgegeben werden, eingelesen und verarbeitet werden, so dass jeder an den Bus (B, B') angeschlossene Slave (1a, 1b, 1c, 2a, 2b, 2c, 3a, 3b, 3c, 3d) vom Master durch die auf der mindestens einen Konfigurationsfrequenz übertragenen Konfigurationsdaten ansprechbar ist,
f) der Master (M) durchläuft wenigstens eine Zusatz-Sendephase, in welcher von ihm Zusatz-Sendedaten auf wenigstens einer bestimmten Zusatzfrequenz (fz) auf den Bus (B,B') aufgegeben werden,
g) von allen Slaves der Gruppe werden die Zusatz-Sendedaten, welche im Schritt f) vom Master (M) auf der Zusatzfrequenz (fz) oder auf den Zusatzfrequenzen auf den Bus (B,B') aufgegeben werden, eingelesen und verarbeitet, so dass alle Slaves der Gruppe vom Master (M) durch die auf der Zusatzfrequenz (fz) oder auf den Zusatzfrequenzen übertragenen Zusatz-Sendedaten ansprechbar ist, auch wenn der Schritt a) noch nicht ausgeführt wurde oder diesen Slaves keine Kommunikationsfrequenz zugeordnet ist,
wobei die Zusatz-Sendedaten Informationen enthalten, welche jedemSlave der Gruppe je wenigstens eine Kommunikationsfrequenz zuordnen, so dass der Schritt a) mit Ausführung der Schritte f) und g) ausgeführt wird, wobei der Schritt a) ausgeführt wird wie folgt:
a1) vom Master (M) wird im Schritt f) durch Senden einer Kennung in den Zusatz-Sendedaten über den Bus (B,B') ein erster der Slaves der Gruppe angesprochen,
a2) der Master (M) führt mit dem ersten Slave auf verschiedenen Testfrequenzen wenigstens je eine Test-Kommunikation durch,
a3) zu jeder Test-Kommunikation wird das zugehörige Signal-/Rausch-Verhältnis oder die zugehörige Bitfehlerrate bestimmt,
a4) von allen denjenigen im Schritt a2) benutzten Testfrequenzen, welche keinem Slave als Kommunikationsfrequenz zugeordnet sind, wird dem ersten Slave diejenige der Testfrequenzen als Kommunikationsfrequenz zugeordnet, mit welcher im Schritt a2) das höchste Signal-/Rausch-Verhältnis oder die geringste Bitfehlerrate erzielt wurde,
a5) die Schritte a1)-a4) werden für die übrigen Slaves der Gruppe entsprechend wiederholt.

2. Kommunikationsverfahren nach Anspruch 1, **dadurch gekennzeichnet,**
**dass** der Master (M) während der Sendephasen gleichzeitig oder zeitlich überlappend jeweils Sendedaten auf verschiedenen Kommunikationsfrequenzen auf den Bus (B,B') aufgibt und auf diese Weise an alle Slaves der Gruppe oder an eine Mehrzahl von Slaves der Gruppe zugleich oder zeitlich überlappend jeweils Sendedaten überträgt.

3. Kommunikationsverfahren nach einem der vorigen Ansprüche,
**gekennzeichnet durch** folgende weiteren Schritte:
d) jeder der Slaves der Gruppe durchläuft Ausgabephasen, während welchen er auf den Bus (B,B') auf wenigstens einer solchen Frequenz, welche
- der mindestens einen Kommunikationsfrequenz entspricht, welche diesem Slave im Schritt a) zugeordnet worden ist,
Ausgabedatensätze aufgibt,
e) der Master (M) liest die Ausgabedatensätze ein, weiche im Schritt d) von den Slaves der Gruppe auf den Bus (B.B') aufgegeben werden, wobei der Master (M) jeden Ausgabedatensatz über dessen Kommunikationsfrequenz demjenigen Slave der Gruppe zuordnet, welchem diese Kommunikationsfrequenz im Schritt a) zugeordnet worden ist.

4. Kommunikationsverfahren nach Anspruch 3, **dadurch gekennzeichnet, dass**
- die Ausgabephasen aller Slaves der Gruppe sich zeitlich überlappen oder zusammenfallen, so dass Ausgabedatensätze von verschiedenen Slaves der Gruppe auf verschiedenen Kommunikationsfrequenzen zeitlich überlappend oder gleichzeitig auf den Bus (B,B') aufgegeben werden und somit den Master (M) zeitlich überlappend oder gleichzeitig erreichen,
- wobei der Master (M) im Schritt e) Ausgabedatensätze von verschiedenen Slaves der Gruppe auf verschiedenen Kommunikationsfrequenzen zeitlich überlappend oder gleichzeitig empfängt, einliest und jeden eingelesenen Ausgabedatensatz anhand der Kommunikationsfrequenz dieses Ausgabedatensatzes einem bestimmten Slave der Gruppe zuordnet.

5. Kommunikationsverfahren nach den Ansprüchen 1 und 3, **dadurch gekennzeichnet, dass** vom Master (M) nur während der Sendephasen Sendedaten auf den Bus (B,B') aufgegeben werden und nur während der Ausgabephasen Ausgabedatensätze empfangen, eingelesen und verarbeitet werden.

6. Kommunikationsverfahren nach wenigstens einem der vorigen Ansprüche, **gekennzeichnet durch** folgende Verfahrensschritte:
h) der Master (M) durchläuft wenigstens eine Konfigurations-Sendephase, in weicher er Konfigurationsdaten auf wenigstens einer bestimmten Konfigurationsfrequenz (fk) auf den Bus (B,B') aufgibt,
i) von allen an den Bus (B,B') angeschlossenen Slaves (1a,1b,1c, 2a,2b,2c, 3a,3b,3c,3d) werden die Konfigurationsdaten, weiche im Schritt h) vom Master auf den Bus (B,B') aufgegeben werden, eingelesen und verarbeitet, so dass jeder an den Bus (B,B') angeschlossene Slave vom Master (M) durch die auf der Konfigurationsfrequenz (fk) oder auf den Konfigurationsfrequenzen übertragenen Konfigurationsdaten ansprechbar ist,
wobei die Konfigurationsdaten solche Informationen enthalten, welche
i1) die im Schritt a) vorgenommene Zuordnung zwischen den Slaves der Gruppe und den Kommuni-kationsfrequenzen löschen, falls der Schritt a) bereits ausgeführt
wurde, und
i2) jedem Slave einer anderen Gruppe von Slaves wenigstens eine eigene Kommunikationsfrequenz zuordnen,
k) der Schritt b) wird weiterhin ausgeführt,
l) von jedem der Slaves der anderen Gruppe werden
- solche Sendedaten eingelesen und verarbeitet, welche vom Master (M) auf einer solchen Frequenz gesendet werden, die
- der diesem Slave im Schritt i) zugeordneten, mindestens einen Kommunikationsfrequenz entspricht,
- und solche Sendedaten ignoriert oder verworfen, welche vom Master auf einer solchen Frequenz gesendet werden, die einer einem anderen Slave der anderen Gruppe zugeordneten mindestens einen Kommunikationsfrequenz entspricht,
so dass jeder der Slaves der anderen Gruppe dadurch einzeln vom Master (M) ansprechbar ist, dass der Master an den Slave Sendedaten auf wenigstens einer diesem zugeordneten Kommunikationsfrequenz über den Bus (B,B') überträgt,
so dass die Übertragung von Sendedaten vom Master (M) zu jedem der Slaves der anderen Gruppe
- auf der mindestens einen Kommunikationsfrequenz erfolgt, welche diesem Slave im Schritt i) zugeordnet worden ist.

7. Kommunikationsverfahren nach Anspruch 1, **dadurch gekennzeichnet dass** die Konfigurationsdaten solche Informationen enthalten, welche jeden Slave (1a,1b,1c,2a,2b,2c,3a,3b,3c,3d) einer Gruppe von Slaves zuordnen.

8. Kommunikationsverfahren nach Anspruch 1, **dadurch gekennzeichnet, dass** folgender weiterer Verfahrensschritt ausgeführt wird:
o) vom Master (M) werden solche Konfigurationsdaten auf den Bus (B,B') aufgegeben, welche jedem Slave (1a,1b,1c,2a,2b,2c,3a,3b,3c,3d) jeder Gruppe wenigstens eine Kommunikationsfrequenz zuordnen, so dass auf diese Weise der Schritt a) für alle Gruppen ausgeführt wird.

9. Kommunikationsverfahren nach einem der Ansprüchen 6 bis 8, **dadurch gekennzeichnet, dass** keinen zwei Slaves derselben Gruppe die gleiche Kommunikationsfrequenz zugeordnet wird.

10. Kommunikationsverfahren nach einem der Ansprüche 6 bis 9, **dadurch gekennzeichnet, dass** folgender Verfahrensschritt ausgeführt wird:
p) vom Master (M) werden solche Konfigurationsdaten auf den Bus (B,B') aufgegeben, welche eine der Gruppen aktiv schalten, so dass die Slaves dieser Gruppe über die Kommunikationsfrequenzen, welche den Slaves dieser Gruppe zugeordnet sind, ansprechbar sind, und die übrigen Gruppen passiv schalten, so dass die Slaves dieser Gruppen nicht über Kommunikationsfrequenzen ansprechbar sind.

11. Kommunikationsverfahren nach wenigstens einem der vorigen Ansprüche, **dadurch gekennzeichnet, dass** als Bussystem ein AS-i-Bussystem oder ein sonstiges Zweidraht-Bussystem verwendet wird, so dass über den Bus (B,B')
- sowohl der Datenverkehr zwischen dem Master (M) und den Slaves der Gruppe übertragen wird
- als auch die Spannungsversorgung des Masters (M) und der an den Bus (B.B') angeschlossenen Slaves erfolgt, wobei zur Signalübertragung vorzugsweise ein orthogonales Frequenzmultiplexverfahren (OFDM) bzw. deren Basisbandvariante Discrete Multitone Transmission (DMT) verwendet wird.

12. Kommunikationsverfahren nach einem der vorigen Ansprüche, **dadurch gekennzeichnet, dass**
- jedem Slave der Gruppe oder jedem Slave wenigstens einer Gruppe je wenigstens zwei Kommunikationsfrequenzen zugeordnet werden,
- der Master (M) mit jedem Slave der Gruppe in bestimmten Zeitabständen auf den diesem Slave zugeordneten Kommunikationsfrequenzen je eine Testkommunikation durchführt, mittels welcher er für jede dem Slave zugeordnete Kommunikationsfrequenz das zugehörige Signal-/Rauschverhältnis oder die zugehörige Bitfehlerrate bestimmt,
- der Master (M) anschließend mit dem Slave auf derjenigen Kommunikationsfrequenz kommuniziert, für welche das höchste Signal-/Rausch-Verhältnis oder die niedrigste Bitfehlerrate bestimmt wurde.

13. Bussystem mit einem Master (M) und wenigstens einer Gruppe von über einen Bus (B, B') parallel an den Master (M) angeschlossenen Slaves (1a,1b,1c, 2a, 2b, 2c, 3a, 3b, 3c, 3d), wobei
- jedem Slave der Gruppe wenigstens eine Kommunikationsfrequenz (f1 ,f2,f3,f4,f5,f6,f7,f8) zugeordnet ist oder zuordenbar ist,
- der Master (M) Sendephasen zu durchlaufen imstande ist, während welcher er verschiedene Sendedaten auf verschiedenen Kommunikationsfrequenzen auf den Bus (B, B') aufgibt,
- jeder Slave der Gruppe imstande ist,
- solche Sendedaten einzulesen und zu verarbeiten, welche der Master (M) auf einer solchen Frequenz auf den Bus (B, B') aufgibt, die der diesem Slave zugeordneten wenigstens einen Kommunikationsfrequenz entspricht,
- und solche Sendedaten ignorierend oder verwerfend ausgebildet, welche der Master (M) auf einer solchen Frequenz auf den Bus (B, B') aufgibt, die einer einem anderen Slave der Gruppe zugeordneten Kommunikationsfrequenz entspricht,
so dass jeder Slave der Gruppe dadurch einzeln vom Master (M) ansprechbar ist, wobei der Master an den Slave Sendedaten auf wenigstens einer diesem zugeordneten Kommunikationsfrequenz über den Bus (B, B') überträgt,
so dass die Übertragung von Sendedaten vom Master (M) zu jedem der Slaves der Gruppe auf derjenigen wenigstens einen Kommunikationsfrequenz erfolgt, weiche diesem Slave zugeordnet ist,
**dadurch gekennzeichnet, dass**
m) der Master (M) wenigstens eine Konfigurations-Sendephase durchläuft, in welcher er Konfigurationsdaten auf wenigstens einer bestimmten Konfigurationsfrequenz (fk) auf den Bus (B, B') aufgibt, wobei
n) von allen an den Bus (B, B') angeschlossenen Slaves (1a,1b,1c, 2a, 2b, 2c, 3a, 3b, 3c, 3d) die Konfigurationsdaten, welche im Schritt m) vom Master (M) auf den Bus (B, B') aufgegeben werden, eingelesen und verarbeitet werden, so dass jeder an den Bus (B, B') angeschlossene Slave (1a, 1b, 1c, 2a, 2b, 2c, 3a, 3b, 3c, 3d) vom Master durch die auf der mindestens einen Konfigurationsfrequenz übertragenen Konfigurationsdaten ansprechbar ist,
wobei der Master (M) imstande ist, wenigstens eine Zusatz-Sendephase zu durchlaufen, in weicherer Zusatz-Sendedaten auf wenigstens einer bestimmten Zusatzfrequenz (fz) auf den Bus (B,B') aufgibt,
- alle Slaves der Gruppe imstande sind, die Zusatz-Sendedaten, welche der Master (M) auf der mindestens einen Zusatzfrequenz (fz) auf den Bus (B,B') aufgibt, einzulesen und zu verarbeiten, so dass alle Slaves der Gruppe vom Master (M) durch die auf der Zusatzfrequenz (fz) oder auf den Zusatzfrequenzen übertragenen Zusatz-Sendedaten ansprechbar sind, auch dann, wenn diesen Slaves keine Kommunikationsfrequenz zugeordnet ist,
wobei der Master (M) imstande ist, jedem Slave der Gruppe dadurch wenigstens eine Kommunikationsfrequenz zuzuordnen, indem er als Zusatz-Sendedaten solche Daten auf den Bus (B,B') aufgibt, weiche Informationen enthalten, die jedem Slave der Gruppe je wenigstens eine Kommunikationsfrequenz zuordnen,
wobei die Zuordnung von wenigstens einer eigenen Kommunikationsfrequenz zu jedem Slave der Gruppe ausführbar ist wie folgt:
- der Master (M) spricht durch Senden einer Kennung in den Zusatz-Sendedaten über den Bus (B,B') einen ersten der Slaves der Gruppe an,
- der Master führt mit dem ersten Slave auf verschiedenen Testfrequenzen wenigstens je eine Test-Kommunikation durch
- zu jeder Test-Kommunikation wird das zugehörige Signal-/Rausch-Verhältnis oder die zugehörige Bitfehlerrate bestimmt,
- von allen denjenigen hierbei benutzten Testfrequenzen, weiche noch keinem Slave als Kommunikationsfrequenz zugeordnet sind, wird dem ersten Slave diejenige der Testfrequenzen als Kommunikationsfrequenz zugeordnet, mit weicher das höchste Signal-/Rausch-Verhältnis oder die geringste Bitfehlerrate erzielt wurde,
- diese Vorgehensweise wird für die übrigen Slaves der Gruppe entsprechend wiederholt.

14. Bussystem nach Anspruch 13, **dadurch gekennzeichnet, dass** keinen zwei Slaves der Gruppe die gleiche Kommunikationsfrequenz zugeordnet ist.

15. Bussystem nach Anspruch 13 oder 14, **dadurch gekennzeichnet, dass** der Master (M) imstande ist, während der Sendephasen gleichzeitig oder zeitlich überlappend jeweils Sendedaten auf verschiedenen Kommunikationsfrequenzen auf den Bus (B,B') aufzugeben und auf diese Weise Sendedaten an alle Slaves der Gruppe oder an eine Mehrzahl von Slaves der Gruppe zugleich oder zeitlich überlappend zu übertragen.

16. Bussystem nach wenigstens einem der Ansprüche 13 bis 15, **dadurch gekennzeichnet, dass**
- jeder der Slaves der Gruppe imstande ist, Ausgabephasen zu durchlaufen, während welcher er auf den Bus (B,B') auf wenigstens einer solchen Frequenz, welche
- der wenigstens einen Kommunikationsfrequenz entspricht, welche diesem Slave zugeordnet ist,
Ausgabedatensätze aufgibt, und
- der Master (M) imstande ist,
- die Ausgabedatensätze einzulesen, welchen die Slaves der Gruppe auf den Bus aufgeben,
- und jeden Ausgabedatensatz über dessen wenigstens einen Kommunikationsfrequenz demjenigen Slave der Gruppe zuzuordnen, welchem diese wenigstens eine Kommunikationsfrequenz zugeordnet ist.

17. Bussystem nach Anspruch 16, **dadurch gekennzeichnet, dass**
- die Ausgabephasen aller Slaves der Gruppe sich zeitlich überlappen oder zusammenfallen, so dass Ausgabedatensätze von verschiedenen Slaves der Gruppe auf verschiedenen Kommunikationsfrequenzen zeitlich überlappend oder gleichzeitig auf den Bus (B,B') gelangen und somit den Master (M) zeitlich überlappend oder gleichzeitig erreichen,
- wobei der Master (M) imstande ist, Ausgabedatensätze von verschiedenen Slaves der Gruppe auf verschiedenen Kommunikationsfrequenzen zeitlich überlappend oder gleichzeitig zu empfangen, einzulesen und jeden eingelesenen Ausgabedatensatz anhand der Kommunikationsfrequenz dieses Ausgabedatensatzes einem bestimmten Slave der Gruppe zuzuordnen.

18. Bussystem nach den Ansprüchen 13 und 16, **dadurch gekennzeichnet, dass** der Master (M) nur während der Sendephasen Sendedaten sendet und nur während der Ausgabephasen Ausgabedatensätze empfängt, einliest und verarbeitet.

19. Bussystem nach wenigstens einem der Ansprüche 13 bis 18, **dadurch gekennzeichnet, dass** folgende Schritte ausführbar sind:
h) der Master (M) durchläuft wenigstens eine Konfigurations-Sendephase, in welcher er Konfigurationsdaten auf wenigstens einer bestimmten Konfigurationsfrequenz (fk) auf den Bus (B,B') aufgibt,
i) alle an den Bus (B,B') angeschlossenen Slaves lesen die Konfigurationsdaten, welche im Schritt h) vom Master (M) auf den Bus (B,B') aufgegeben werden, ein und verarbeiten sie, so dass jeder an den Bus (B,B') angeschlossene Slave vom Master (M) durch die auf der Konfigurationsfrequenz (fk) oder auf den Konfigurationsfrequenzen übertragenen Konfigurationsdaten ansprechbar ist,
wobei die Konfigurationsdaten solche Informationen enthalten, welche
i1) die im Schritt a) vorgenommene Zuordnung zwischen den Slaves der Gruppe und den Kommunikationsfrequenzen löschen, falls der Schritt a) bereits ausgeführt wurde, und
i2) jedem Slave einer anderen Gruppe von Slaves wenigstens eine eigene Kommunikationsfrequenz zuordnen,
k) der Schritt b) wird weiterhin ausgeführt,
l) von jedem der Slaves der anderen Gruppe werden
- solche Sendedaten eingelesen und verarbeitet, welche vom Master auf einer solchen Frequenz gesendet werden, die
- der diesem Slave im Schritt i) zugeordneten mindestens einen Kommunikationsfrequenz entspricht,
- und solche Sendedaten ignoriert oder verworfen, welche vom Master (M) auf einer solchen Frequenz gesendet werden, die einer einem anderen Slave der anderen Gruppe zugeordneten mindestens einen Kommunikationsfrequenz entspricht,
so dass jeder der Slaves der anderen Gruppe dadurch einzeln vom Master (M) ansprechbar ist, dass der Master (M) an den Slave Sendedaten auf wenigstens einer diesem zugeordneten Kommunikationsfrequenz über den Bus (B,B') überträgt,
so dass die Übertragung von Sendedaten vom Master zu jedem der Slaves der anderen Gruppe
- auf der mindestens einen Kommunikationsfrequenz erfolgt, welche diesem Slave im Schritt i) zugeordnet worden ist.

20. Bussystem nach Anspruch 13, **dadurch gekennzeichnet, dass** die Konfigurationsdaten solche Informationen enthalten, welche jeden Slave (1a,1b,1c,2a,2b,2c,3a,3b,3c,3d) einer Gruppe von Slaves zuordnen.

21. Bussystem nach Anspruch 13, **dadurch gekennzeichnet, dass** der Master (M) imstande ist, solche Konfigurationsdaten auf den Bus (B,B') aufzugeben, welche jedem Slave (1a,1b,1c,2a,2b,2c,3a,3b,3c,3d) jeder Gruppe wenigstens eine Kommunikationsfrequenz zuordnen.

22. Bussystem nach einem der Ansprüche 13 bis 21, **dadurch gekennzeichnet, dass** keinen zwei Slaves derselben Gruppe die gleiche Kommunikationsfrequenz zugeordnet ist.

23. Bussystem nach einem der Ansprüche 13 bis 22, **dadurch gekennzeichnet, dass** der Master (M) imstande ist, solche Konfigurationsdaten auf den Bus (B,B') aufzugeben, welche eine der Gruppen aktiv schalten, so dass die Slaves dieser Gruppe über die Kommunikationsfrequenzen, welche den Slaves dieser Gruppe zugeordnet sind, ansprechbar sind, und die übrigen Gruppen passiv schalten, so dass die Slaves dieser Gruppen nicht über Kommunikationsfrequenzen ansprechbar sind.

24. Bussystem nach wenigstens einem der Ansprüche 13 bis 23, **dadurch gekennzeichnet, dass** das Bussystem ein AS-i-Bussystem oder ein sonstiges Zweidraht-Bussystem ist, so dass über den Bus (B,B')
- sowohl der Datenverkehr zwischen dem Master (M) und den Slaves
- als auch die Spannungsversorgung des Masters (M) und der an den Bus (B,B') angeschlossenen Slaves erfolgt, wobei zur Signalübertragung verzugsweise ein OFDM-Träger bzw. dessen Basisvariante ein DMT-Träger vorgesehen ist.

25. Bussystem nach einem der Ansprüche 13 bis 24, **dadurch gekennzeichnet, dass** jedem Slave der Gruppe oder jedem Slave wenigstens einer Gruppe je wenigstens zwei Kommunikationsfrequenzen zugeordnet ist,
- der Master (M) imstande ist, mit jedem Slave der Gruppe in bestimmten Zeitabständen auf den diesem Slave zugeordneten Kommunikationsfrequenzen je eine Testkommunikation durchzuführen, mittels welcher er für jede dem Slave zugeordnete Kommunikationsfrequenz das zugehörige Signal-/Rauschverhältnis oder die zugehörige Bitfehlerrate bestimmt,
- der Master (M) imstande ist, anschließend mit dem Slave auf derjenigen Kommunikationsfrequenz zu kommunizieren, für welche das höchste Signal-/Rausch-Verhältnis oder die niedrigste Bitfehlerrate bestimmt wurde.

## Claims

1. Communication method, in particular for automation technology, for the exchange of data between a master (M) and at least one group of slaves (1a, 1b, 1c, 2a, 2b, 2c, 3a, 3b, 3c, 3d) connected in parallel to the master (M) across a bus (B, B') in a bus system comprising the master (M), the slaves and the bus (B, B'), with the following steps:
a) to each slave of the group at least one communication frequency (f1, f2, f3, f4, f5, f6, f7, f8) is assigned,
b) the master (M) runs through send phases during which it outputs to the bus (B, B') several send data at different communication frequencies,
c) by each slave of the group such send data are read in and processed that are output by the master (M) to the bus (B, B') at such frequency as corresponds to the at least one communication frequency assigned to this slave in step a),
and such send data are ignored or rejected as are output by the master (M) to the bus (B, B') at such frequency that does not correspond to at least one of its assigned communication frequencies, **characterized in that**
m) the master (M) runs through at least one configuration send phase in which it outputs configuration data at at least one certain configuration frequency (fK) to the bus (B, B'), wherein
n) by all slaves (1a, 1b, 1c, 2a, 2b, 2c, 3a, 3b, 3c, 3d) connected to the bus (B, B') the configuration data, output in step m) by the master (M) to the bus (B,B'), are read in and processed such that each slave (1a, 1b, 1c, 2a, 2b, 2c, 3a, 3b, 3c, 3d) connected to the bus (B, B') is addressable by the master through the configuration data transmitted at the at least one configuration frequency,
f) the master (M) runs through at least one additional send phase in which it outputs to the bus (B, B') additional send data at at least one certain additional frequency (fz),
g) by all slaves of the group the additional send data, which are output in step f) by the master (M) to the bus (B, B') at the additional frequency (fz) or at the additional frequencies, are read in and processed such that all slaves of the group are addressable by the master (M) through the additional send data transmitted at the additional frequency (fz) or the additional frequencies even if
step a) has not yet been executed or no communication frequency is assigned to these slaves,
wherein the additional send data contain information that assign to each slave of the group at least one communication frequency each, such that step a) is executed with the execution of steps f) and g), wherein step a) is executed as follows:
a1) by sending an identifier in the additional send data across bus (B, B') in step f), a first of the slaves of the group is addressed by the master (M),
a2) the master (M) carries out at least one test communication with the first slave at each different test frequency,
a3) for each test communication the associated signal to noise ratio or the associated bit error rate is determined,
a4) of all the test frequencies utilized in step a2) that are not assigned to a slave as the communication frequencies, the first slave is assigned that test frequency as communication frequency with which in step a2 the highest signal to noise ratio or the lowest bit error rate had been achieved,
a5) steps a1) to a4) are repeated correspondingly for the remaining slaves of the group.

2. Communication method as in claim 1, **characterized in that** during the send phases simultaneously or overlapping in time the master (M) outputs send data at different communication frequencies to the bus (B, B') and in this manner transmits send data to all slaves of the group or to a plurality of slaves of the group simultaneously or overlapping in time.

3. Communication method as in one of the preceding claims, **characterized by** the following further steps:
d) each slave of the group runs through output phases during which it outputs output data sets to the bus (B, B') at at least one such frequency as
- corresponds to the at least one communication frequency which had been assigned to this slave in step a)
e) the master (M) reads the output data sets that were output in step d) by the slaves of the group to the bus (B, B'), wherein the master (M) assigns each output data set across its communication frequency to that slave of the group to which this communication frequency had been assigned in step a).

4. Communication method as in claim 3, **characterized in that**
- the output phases of all slaves of the group overlap in time or coincide such that output data sets of several slaves of the group are output at different communication frequencies to the Bus (B. B') overlapping in time or simultaneously and consequently reach the master (M) overlapping in time or simultaneously,
- wherein the master (M) in step e) receives, overlapping in time or simultaneously, output data sets from several slaves of the group at different communication frequencies, reads them in and assigns each read-in output data set to a specific slave of the group.

5. Communication method as in claims 1 and 3, **characterized in that** send data are output by the master (M) to the bus (B, B') only during the send phases and only during the output phases are output data sets received, read in and processed by the same.

6. Communication method as in at least one of the preceding claims, **characterized by** the following method steps:
h) the master (M) runs through at least one configuration send phase in which it outputs configuration data to the bus (B, B') at at least one specific configuration frequency (fk),
i) by all slaves (1a, 1b, 1c, 2a, 2b, 2c, 3a, 3b, 3c, 3d) connected to the bus (B,B') the configuration data, that had been output in step h) by the master (M) to the bus (B, B'), are read in and processed such that each slave connected to the bus (B, B') is addressable by the master (M) through the configuration data transmitted at the configuration frequency (fk) or at the configuration frequencies, wherein the configuration data contain such information
i1) which delete the assignment between the slaves of the group and the communication frequencies made in step a) if step a) has already been executed, and
i2) assign to each slave of another group of slaves at least one separate communication frequency,
k) step b) is continued to be executed,
l) by each slave of the other group
- such send data are read in and processed which are sent by the master (M) at such a frequency as
- corresponds to the at least one communication frequency assigned to this slave in step i),
- and such send data are ignored or rejected which are sent by the master at such a frequency which corresponds to the at least one communication frequency assigned to another slave of the other group,
such that each of the slaves of the other group is individually addressable by the master (M) thereby that the master transmits across the bus (B, B') send data to the slave at at least one of the communication frequencies assigned thereto,
such that the transmission of send data from the master (M) to each slave of the other group
- takes place at the at least one communication frequency assigned to this slave in step i).

7. Communication method as in claim 1, **characterized in that** the configuration data contain such information that assign each slave (1a, 1b, 1c, 2a, 2b, 2c, 3a, 3b, 3c, 3d) to a group of slaves.

8. Communication method as in claim 1, **characterized in that** the following further method step is executed:
o) by the master (M) such configuration data are output to the bus (B, B') which assign to each slave (1a, 1b, 1c, 2a, 2b, 2c, 3a, 3b, 3c, 3d) of each group at least one communication frequency such that in this manner step a) is executed for all groups.

9. Communication method as in one of claims 6 to 8, **characterized in that** no two slaves of the same group have the same communication frequency assigned to them.

10. Communication method as in one of claims 6 to 9, **characterized in that** the following method step is executed:
p) such configuration data are output by the master (M) to the bus (B, B') that switch one of the groups active such that the slaves of this group are addressable via the communication frequencies which are assigned to the slaves of this group, and switch the remaining groups passive such that the slaves of these groups are not addressable via communication frequencies.

11. Communication method as in at least one of the preceding claims, **characterized in that** as the bus system an AS-i bus system or another two-wire bus system is utilized such that across the bus (B, B')
- the data traffic between the master (M) and the slaves of the group is conducted
- as well as also the voltage supply of the master (M) and the slaves connected to the bus (B, B') takes place, wherein for the signal transmission an orthogonal frequency division multiplex method (OFDM) or its baseband variant, a Discrete Multitone Transmission (DMT) is preferably utilized.

12. Communication method as in one of the preceding claims, **characterized in that**
- to each slave of the group or to each slave of at least one group at least two communication frequencies are assigned,
- at certain time intervals the master (M) carries out one test communication with each slave of the group at each of the communication frequencies assigned to this slave by means of which it determines for each communication frequency assigned to the slave the associated signal to noise ratio or the associated bit error rate,
- the master (M) subsequently communicates with the slave at that communication frequency for which the highest signal to noise ratio or the lowest bit error rate had been determined.

13. Bus system with one master (M) and at least one group of slaves (1a, 1b, 1c, 2a, 2b, 2c, 3a, 3b, 3c, 3d) connected in parallel across a bus (B, B') to the master (M), wherein
- to each slave of the group at least one communication frequency (f1, f2, f3, f4, f5, f6, f7, f8) is assigned or is assignable,
- the master (M) has the capacity to run through send phases during which it outputs to the bus (B, B') several send data at several communication frequencies,
- each slave of the group has the capacity
- to read in and process such send data that the master (M) outputs at such a frequency to the bus (B, B') as corresponds to the at least one communication frequency assigned to this slave,
- and ignores or rejects such send data that the master (M) outputs to the bus (B, B') at such a frequency as corresponds to a communication frequency assigned to another slave of the group,
such that each slave of the group is thereby individually addressable by the master (M), wherein the master transmits send data across the bus (B,B') to the slave at at least one of the communication frequencies assigned to it,
such that the transmission of send data from the master (M) to each of the slaves of the group takes place at the at least one communication frequency assigned to this slave,
**characterized in that**
m) the master (M) runs through at least one configuration send phase in which it outputs to the bus (B, B') configuration data at at least one certain configuration frequency (fk), wherein
n) by all slaves (1a, 1b, 1c, 2a, 2b, 2c, 3a, 3b, 3c, 3d) connected the bus (B, B') the configuration data, which had been output in step m) by the master (M) to the bus (B, B'), are read in and processed such that each slave (1a, 1b, 1c, 2a, 2b, 2c, 3a, 3b, 3c, 3d) connected the bus (B, B') is addressable by the master through the configuration data transmitted at the at least one configuration frequency,
wherein the master (M) has the capacity to run through at least one additional send phase in which it outputs to the bus (B, B') additional send data at at least one certain additional frequency (fz),
- all slaves of the group have the capacity to read in the additional send data, which the master (M) outputs at the at least one additional frequency (fz) to the bus (B, B'), and to process them such that all slaves of the group are addressable by the master (M) through the additional send data transmitted at the additional frequency (fz) or the additional frequencies, even if no communication frequency is assigned to these slaves,
wherein the master (M) has the capacity to assign to each slave of the group at least one communication frequency thereby that it outputs to the bus (B, B') such data as additional send data which contain information that assigns to each slave of the group at least one communication frequency,
wherein the assignment of at least one separate communication frequency to each slave of the group can be accomplished as follows:
- by sending an identifier in the additional send data across the bus (B, B') the master (M) addresses a first of the slaves of the group,
- the master (M) carries out with the first slave at least one test communication at each different test frequency,
- for each test communication the associated signal to noise ratio or the associated bit error rate is determined,
- out of all the test frequencies used herein, which have not yet been assigned to any slave as the communication frequency, to the first slave is assigned that test frequency as the communication frequency with which the highest signal to noise ratio or the lowest bit error rate has been achieved,
- this process is repeated correspondingly for all remaining slaves of the group.

14. Bus system as in claim 13, **characterized in that** no two slaves of the group have the same communication frequency assigned to them.

15. Bus system as in claim 13 or 14, **characterized in that** the master (M) has the capacity to output during the send phases simultaneously or overlapping in time send data at several communication frequencies to the bus (B, B') and in this manner transmit send data to all slaves of the group or to a plurality of slaves of the group simultaneously or overlapping in time.

16. Bus system as in at least one of claims 13 to 15, **characterized in that**
- each of the slaves of the group has the capacity to run through output phases during which it outputs output data sets to the bus (B, B') at at least one such frequency as
- corresponds to the at least one communication frequency assigned to this slave, and
- the master (M) has the capacity
- to read in the output data sets which the slaves of the group output to the bus,
- and to assign each output data set via its at least one communication frequency to that slave of the group to which this at least one communication frequency is assigned.

17. Bus system as in claim 16, **characterized in that**
- the output phases of all slaves of the group overlap in time or coincide such that output data sets of several slaves of the groups arrive on the bus (B, B') at different communication frequencies overlapping in time or simultaneously and consequently reach the master (M) with time overlap or simultaneously,
- wherein the master (M) has the capacity to receive output data sets from several slaves of the group at different communication frequencies overlapping in time or simultaneously, to read them in and to assign each read-in output data set to a certain slave of the group based on the communication frequency of this output data set.

18. Bus system as in claims 13 and 16, **characterized in that** the master (M) sends send data only during the send phases and only receives, reads them in and processes output data sets during the output phases.

19. Bus system as in at least one of claims 13 to 18, **characterized in that** the following steps are executable:
h) the master (M) runs through at least one configuration send phase in which it outputs to the bus (B, B') configuration data at at least one certain configuration frequency (fk),
i) all slaves connected to the bus (B, B') read in the configuration data output by the master (M) to the bus (B, B') in step h) and process them such that each slave connected to the bus (B, B') is addressable by the master (M) through the configuration data transmitted at the communication frequency (fk) or at the configuration frequencies,
wherein the configuration data contain such information that
i1) delete the assignment carried out in step a) between the slaves of the group and the communication frequencies if step a) has already been executed, and
i2) assign to each slave of another group of slaves at least one separate communication frequency,
k) step b) continues to be carried out,
l) by each slave of the other group are
- such send data being read in and processed which are sent by the master at one such frequency as
- corresponds to the at least one communication frequency assigned to this slave in step i),
- and such send data are ignored or rejected which are sent by the master (M) at such frequency as corresponds to the at least one communication frequency assigned to another slave of the other group,
such that each of the slaves of the other group is individually addressable by the master (M) thereby that the master (M) transmits across the bus (B, B') to the slave send data at at least one communication frequency assigned to it,
such that the transmission of send data from the master (M) to each of the slaves of the other group
- takes place at the at least one communication frequency that had been assigned to this slave in step i).

20. Bus system as in claim 13, **characterized in that** the configuration data contain such information that assign each slave (1a, 1b, 1c, 2a, 2b, 2c, 3a, 3b, 3c, 3d) to a group of slaves.

21. Bus system as in claim 13, **characterized in that** the master (M) has the capacity to output such configuration data to the bus (B, B') which assign to each slave (1a, 1b, 1c, 2a, 2b, 2c, 3a, 3b, 3c, 3d) of each group at least one communication frequency.

22. Bus system as in one of claims 13 to 21, **characterized in that** no two slaves of the same group have the same communication frequency assigned to them.

23. Bus system as in one of claims 13 to 22, **characterized in that** the master (M) has the capacity to output such configuration data to the bus (B, B') which switch one of the groups active such that the slaves of this group are addressable via the communication frequencies which are assigned to the slaves of this group, and switch the remaining groups passive such that the slaves of these groups are not addressable via communication frequencies.

24. Bus system as in at least one of claims 13 to 23, **characterized in that** the bus system is an AS-i bus system or another two-wire bus system such that across the bus (B, B')
- the data traffic between the master (M) and the slaves is conducted
- as well as the voltage supply of the master (M) and the slaves connected to the bus (B, B') takes place, wherein for the signal transmission preferably an OFDM carrier or its baseband variant, a DMT carrier is provided.

25. Bus system as in one of claims 13 to 24, **characterized in that** to each slave of the group or to each slave of at least one of the groups at least two communication frequencies each are assigned,
- the master (M) has the capacity of carrying out one test communication with each slave of the group at certain time intervals at communication frequencies assigned to this slave, by means of which it determines for each of the communication frequency assigned to the slave the associated signal to noise ratio or the associated bit error rate,
- the master (M) has the capacity to communicate subsequently with the slave at that communication frequency for which the highest signal to noise ratio or the lowest bit error rate had been determined.

## Revendications

1. Procédé de communication, en particulier pour l'automatisation, destiné à l'échange de données entre un maître (M) et au moins un groupe d'esclaves (1a, 1b, 1c, 2a, 2b, 2c, 3a, 3b, 3c, 3d) connectés en parallèle au maître (M) par le biais d'un bus (B, B') dans un système de bus comprenant le maître (M), les esclaves et le bus (B, B'), avec les étapes suivantes :
a) au moins une fréquence de communication (f1, f2, f3, f4, f5, f6, f7, f8) étant affectée à chaque esclave du groupe,
b) le maître (M) parcourt des phases d'émission pendant lesquelles il expédie au bus (B, B') différentes données d'émission sur différentes fréquences de communication,
c) les données d'émission qui sont expédiées par le maître (M) sur le bus (B, B') sur une fréquence qui correspond à la fréquence de communication au moins au nombre de un affectée à cet esclave dans l'étape a) sont lues et traitées par chaque esclave du groupe,
et les données d'émission qui sont expédiées par le maître (M) sur le bus (B, B') sur une fréquence qui ne correspond pas à au moins une de sa fréquence de communication affectée sont ignorées ou rejetées, **caractérisé en ce que**
m) le maître (M) parcourt au moins une phase d'émission de configuration dans laquelle il expédie sur le bus (B, B') des données de configuration sur au moins une fréquence de configuration (fk) définie,
n) les données de configuration qui sont expédiées dans l'étape m) par le maître (M) sur le bus (B, B') sont lues et traitées par tous les esclaves (1a, 1b, 1c, 2a, 2b, 2c, 3a, 3b, 3c, 3d) connectés au bus (B, B') de telle sorte que chaque esclave (1a, 1b, 1c, 2a, 2b, 2c, 3a, 3b, 3c, 3d) connecté au bus (B, B') peut être sollicité par le maître par les données de configuration transmises sur la fréquence de configuration au moins au nombre de un,
f) le maître (M) parcourt au moins une phase d'émission supplémentaire dans laquelle il expédie sur le bus (B, B') des données d'émission supplémentaires sur au moins une fréquence supplémentaire (fz) définie,
g) les données d'émission supplémentaires qui sont expédiées sur le bus (B, B') dans l'étape f) par le maître (M) sur la fréquence supplémentaire (fz) ou sur les fréquences supplémentaires sont lues et traitées par tous les esclaves du groupe de telle sorte que tous les esclaves du groupe peuvent être sollicités par le maître (M) par les données d'émission supplémentaires transmises sur la fréquence supplémentaire (fz) ou sur les fréquences supplémentaires, même si l'étape a) n'a pas encore été réalisée ou si aucune fréquence de communication n'est affectée à ces esclaves,
les données d'émission supplémentaires contenant des informations qui affectent à chaque esclave du groupe respectivement au moins une fréquence de communication de telle sorte que l'étape a) est réalisée avec la réalisation des étapes f) et g), l'étape a) étant réalisée comme suit :
a1) un premier des esclaves du groupe est sollicité par le maître (M) dans l'étape f) par l'émission d'un identifiant dans les données d'émission supplémentaires par le biais du bus (B, B'),
a2) le maître (M) effectue avec le premier esclave au moins respectivement une communication test sur différentes fréquences test,
a3) le rapport signal/bruit correspondant ou le taux d'erreurs sur les bits correspondant est défini pour chaque communication test,
a4) parmi toutes les fréquences test utilisées dans l'étape a2) qui ne sont pas affectées en tant que fréquence de communication à un esclave, celle des fréquences test qui est affectée au premier esclave en tant que fréquence de communication est celle avec laquelle, dans l'étape a2), le rapport signal/bruit le plus élevé ou le taux d'erreurs sur les bits le plus faible a été obtenu,
a5) les étapes a1)-a4) sont répétées de façon correspondante pour les autres esclaves du groupe.

2. Procédé de communication selon la revendication 1, **caractérisé en ce que**, pendant les phases d'émission, le maître (M) expédie sur le bus (B, B') de façon simultanée ou bien en chevauchement temporel respectivement des données d'émission sur différentes fréquences de communication et transmet de cette façon à tous les esclaves du groupe ou à une pluralité d'esclaves du groupe respectivement des données d'émission de façon simultanée ou bien en chevauchement temporel.

3. Procédé de communication selon l'une des revendications précédentes, **caractérisé par** les autres étapes suivantes :
d) chacun des esclaves du groupe parcourt des phases de sortie pendant lesquelles il expédie sur le bus (B, B') des jeux de données de sortie sur au moins une fréquence qui
- correspond à la fréquence de communication au moins au nombre de un qui a été affectée à cet esclave dans l'étape a),
e) le maître (M) lit les jeux de données de sortie qui sont expédiés sur le bus (B, B') dans l'étape d) par les esclaves du groupe, le maître (M) affectant, par le biais de fréquence de communication, chaque jeu de données de sortie à l'esclave du groupe auquel cette fréquence de communication a été affectée dans l'étape a).

4. Procédé de communication selon la revendication 3, **caractérisé en ce que**
- les phases de sortie de tous les esclaves du groupe coïncident ou se chevauchent temporellement de telle sorte que des jeux de données de sortie de différents esclaves du groupe sont expédiés sur le bus (B, B') sur différentes fréquences de communication en chevauchement temporel ou simultanément et atteignent ainsi le maître (M) en chevauchement temporel ou simultanément,
- le maître (M) recevant, lisant en chevauchement temporel ou simultanément dans l'étape e) des jeux de données de sortie de différentes esclaves du groupe sur différentes fréquences de communication et affectant à un esclave défini du groupe chaque jeu de données de sortie lu à l'aide de la fréquence de communication de ce jeu de données de sortie.

5. Procédé de communication selon les revendications 1 et 3, **caractérisé en ce que** le maître (M) n'expédie sur le bus (B, B') des données d'émission que pendant les phases d'émission et **en ce que** des jeux de données de sortie ne sont reçus, lus et traités que pendant les phases de sortie.

6. Procédé de communication selon au moins l'une des revendications précédentes, **caractérisé par** les étapes de procédé suivantes :
h) le maître (M) parcourt au moins une phase d'émission de configuration dans laquelle il expédie des données de configuration sur le bus (B, B') sur au moins une fréquence de configuration (fk) définie,
i) les données de configuration qui sont expédiées dans l'étape h) par le maître (M) sur le bus (B, B') sont lues et traitées par tous les esclaves (1a, 1b, 1c, 2a, 2b, 2c, 3a, 3b, 3c, 3d) connectés au bus (B, B') de telle sorte que chaque esclave connecté au bus (B, B') peut être sollicité par le maître par les données de configuration transmises sur la fréquence de configuration (fk) ou sur les fréquences de configuration,
les données de configuration contenant des informations qui
i1) effacent l'affectation entreprise dans l'étape a) entre les esclaves du groupe et les fréquences de communication si l'étape a) a déjà été réalisée, et
i2) affectent à chaque esclave d'un autre groupe d'esclaves au moins une propre fréquence de communication,
k) l'étape b) continue à être réalisée,
l) chacun des esclaves de l'autre groupe
- lit et traite les données d'émission qui ont été envoyées par le maître (M) sur une fréquence
- qui correspond à la fréquence de communication au moins au nombre de un affectée à cet esclave dans l'étape i),
- et ignore ou rejette les données d'émission qui ont été envoyées par le maître sur une fréquence qui correspond à une fréquence de communication au moins au nombre de un affectée à un autre esclave de l'autre groupe,
de telle sorte que chacun des esclaves de l'autre groupe peut être sollicité individuellement par le maître (M) du fait que le maître transmet sur le bus (B, B') à l'esclave des données d'émission sur au moins une fréquence de communication affectée à cet esclave, de telle sorte que la transmission de données d'émission à partir du maître (M) vers chacun des esclaves de l'autre groupe s'effectue sur la fréquence de communication au moins au nombre de un qui a été affectée à cet esclave dans l'étape i).

7. Procédé de communication selon la revendication 1, **caractérisé en ce que** les données de configuration contiennent des informations qui affectent chaque esclave (1a, 1b, 1c, 2a, 2b, 2c, 3a, 3b, 3c, 3d) à un groupe d'esclaves.

8. Procédé de communication selon la revendication 1, **caractérisé en ce que** l'autre étape de procédé suivante est réalisée :
o) les données de configuration qui affectent au moins une fréquence de communication à chaque esclave (1a, 1b, 1c, 2a, 2b, 2c, 3a, 3b, 3c, 3d) de chaque groupe sont expédiées par le maître (M) sur le bus (B, B') de telle sorte que de cette façon l'étape a) est réalisée pour tous les groupes.

9. Procédé de communication selon l'une des revendications 6 à 8, **caractérisé en ce que** la mêle fréquence de communication n'est pas affectée à deux esclaves du même groupe.

10. Procédé de communication selon l'une des revendications 6 à 9, **caractérisé en ce que** l'étape de procédé suivante est réalisée :
p) le maître (M) expédie sur le bus (B, B') les données de configuration qui rendent actif par commutation un des groupes de telle sorte que les esclaves de ce groupe peuvent être sollicités par le biais des fréquences de communication qui sont affectées aux esclaves de ce groupe, et rendent passifs par commutation les groupes restants de telle sorte que les esclaves de ces groupes ne peuvent pas être sollicités par le biais de fréquences de communication.

11. Procédé de communication selon au moins l'une des revendications précédentes, **caractérisé en ce qu'**un système de bus AS-i ou un autre système de bus à deux fils est utilisé en tant que système de bus, de telle sorte que, par le biais du bus (B, B'),
- non seulement le trafic de données entre le maître (M) et les esclaves du groupe est transmis
- mais aussi l'alimentation en tension du maître (M) et des esclaves connectés au bus (B, B') est effectuée, un procédé de multiplexage par répartition orthogonale de la fréquence (OFDM) ou respectivement sa variante de base, la transmission à multitonalité discrète (DMT), étant de préférence utilisé(e) pour la transmission des signaux.

12. Procédé de communication selon l'une des revendications précédentes, **caractérisé en ce que**
- respectivement au moins deux fréquences de communication sont affectées à chaque esclave du groupe ou à chaque esclave d'au moins un groupe,
- avec chaque esclave du groupe, à des intervalles de temps définis, le maître (M) effectue sur les fréquences de communication affectées à cet esclave respectivement une communication test au moyen de laquelle il définit pour chaque fréquence de communication affectée à l'esclave le rapport signal/bruit correspondant ou le taux d'erreurs sur les bits correspondant,
- le maître (M) communique ensuite avec l'esclave sur la fréquence de communication pour laquelle le rapport signal/bruit le plus élevé ou le taux d'erreurs sur les bits le plus faible a été défini.

13. groupe d'esclaves (1a, 1b, 1c, 2a, 2b, 2c, 3a, 3b, 3c, 3d) connectés en parallèle au maître (M),
- au moins une fréquence de communication (f1, f2, f3, f4, f5, f6, f7, f8) étant affectée ou pouvant être affectée à chaque esclave du groupe,
- le maître (M) étant en mesure de parcourir des phases d'émission pendant lesquelles il expédie sur le bus (B, B') différentes données d'émission sur différentes fréquences de communication,
- chaque esclave du groupe étant en mesure
- de lire et de traiter les données d'émission que le maître (M) expédie sur le bus (B, B') sur une fréquence qui correspond à la fréquence de communication au moins au nombre de un affectée à cet esclave
- et les données d'émission ignorant ou rejetant constituées que le maître (M) expédie sur le bus (B, B') sur une fréquence qui correspond à une fréquence de communication affectée à un autre esclave du groupe,
de telle sorte que chaque esclave du groupe peut être de ce fait sollicité individuellement par le maître (M), le maître (M) transmettant par le biais du bus (B, B') à l'esclave des données d'émission sur au moins une fréquence de communication affectée à celui-ci,
de telle sorte que la transmission de données d'émission à partir du maître (M) vers chacun des esclaves du groupe s'effectue sur la fréquence de communication au moins au nombre de un qui est affectée à cet esclave,
**caractérisé en ce que**
m) le maître (M) parcourt au moins une phase d'émission de configuration dans laquelle il expédie sur le bus (B, B') des données de configuration sur au moins une fréquence de configuration (fk) définie,
n) les données de configuration qui sont expédiées dans l'étape m) par le maître (M) sur le bus (B, B') sont lues et traitées par tous les esclaves (1a, 1b, 1c, 2a, 2b, 2c, 3a, 3b, 3c, 3d) connectés au bus (B, B') de telle sorte que chaque esclave (1a, 1b, 1c, 2a, 2b, 2c, 3a, 3b, 3c, 3d) connecté au bus (B, B') peut être sollicité par le maître par les données de configuration transmises sur la fréquence de configuration au moins au nombre de un,
le maître (M) étant en mesure de parcourir au moins une phase d'émission supplémentaire dans laquelle il expédie sur le bus (B, B') des données d'émission supplémentaires sur au moins une fréquence supplémentaire (fz) définie,
- tous les esclaves du groupe sont mesure de lire et de traiter les données d'émission supplémentaires que le maître (M) expédie sur le bus (B, B') sur la fréquence supplémentaire (fz) au moins au nombre de un de telle sorte que tous les esclaves du groupe peuvent être sollicités par le maître (M) par les données d'émission supplémentaires transmises sur la fréquence supplémentaire (fz) ou sur les fréquences supplémentaires même si aucune fréquence de communication n'est affectée à ces esclaves,
le maître (M) étant en mesure d'affecter à chaque esclave du groupe au moins une fréquence de communication du fait qu'il expédie sur le bus (B, B') en tant que données d'émission supplémentaires des données qui contiennent des informations qui affectent à chaque esclave du groupe respectivement au moins une fréquence de communication, l'affectation d'au moins une propre fréquence de communication à chaque esclave du groupe pouvant être réalisée comme suit :
- par l'émission d'un identifiant dans les données d'émission supplémentaires par le biais du bus (B, B'), le maître (M) sollicite un premier des esclaves du groupe,
- le maître effectue avec le premier esclave sur différentes fréquences test au moins respectivement une communication test,
- pour chaque communication test, le rapport signal/bruit correspondant ou le taux d'erreurs sur les bits correspondant est défini,
- parmi toutes les fréquences test utilisées en l'occurrence qui ne sont pas encore affectées à un esclave en tant que fréquence de communication, celle des fréquences test qui est affectée au premier esclave en tant que fréquence de communication est celle avec laquelle le rapport signal/bruit le plus élevé ou le taux d'erreurs sur les bits le plus faible a été obtenu,
- cette procédure est répétée en conséquence pour les autres esclaves du groupe.

14. Système de bus selon la revendication 13, **caractérisé en ce que** la même fréquence de communication n'est pas affectée à deux esclaves du groupe.

15. Système de bus selon la revendication 13 ou 14, **caractérisé en ce que** le maître (M) est en mesure, pendant les phases d'émission, d'expédier simultanément ou en chevauchement temporel respectivement des données d'émission sur différentes fréquences de communication sur le bus (B, B') et de transmettre de cette façon des données d'émission à tous les esclaves du groupe ou à une pluralité d'esclaves du groupe simultanément ou en chevauchement temporel.

16. Système de bus selon au moins l'une de revendications 13 à 15, **caractérisé en ce que**
- chacun des esclaves du groupe est en mesure de parcourir des phases de sortie pendant lesquelles il expédie des jeux de données de sortie sur le bus (B, B') sur au moins une fréquence qui correspond à la fréquence de communication au moins au nombre de un qui est affectée à cet esclave, et
- le maître (M) est en mesure
- de lire les jeux de données de sortie que les esclaves du groupe expédient sur le bus,
- et d'affecter chaque jeu de données de sortie par le biais de sa fréquence de communication au moins au nombre de un à l'esclave du groupe auquel est affectée cette fréquence de communication au moins au nombre de un.

17. Système de bus selon la revendication 16, **caractérisé en ce que**
- les phases de sortie de tous les esclaves du groupe se chevauchent ou coïncident temporellement de telle sorte que des jeux de données de sortie de différentes esclaves du groupe arrivent au bus (B, B'), en chevauchement temporel ou simultanément, sur différentes fréquences de communication et atteignent ainsi le maître (M) en chevauchement temporel ou simultanément,
- le maître (M) étant en mesure de recevoir, et de lire des jeux de données de sortie de différents esclaves du groupe sur différentes fréquences de communication en chevauchement temporel ou simultanément et d'affecter à un esclave défini du groupe chaque jeu de données de sortie lu à l'aide de la fréquence de communication de ce jeu de données de sortie.

18. Système de bus selon les revendications 13 et 16, **caractérisé en ce que** le maître (M) n'envoie des données d'émission que pendant les phases d'émission et ne reçoit, lit et traite des jeux de données de sortie que pendant les phases de sortie.

19. Système de bus selon au moins l'une des revendications 13 à 18, **caractérisé en ce que** les étapes suivantes peuvent être réalisées :
h) le maître (M) parcourt au moins une phase d'émission de configuration dans laquelle il expédie des données de configuration sur le bus (B, B') sur au moins une fréquence de configuration (fk) définie,
i) tous les esclaves connectés au bus (B, B') lisent les données de configuration que le maître (M) expédie sur le bus (B, B') dans l'étape h) et les traitent de telle sorte que chaque esclave connecté au bus (B, B') peut être sollicité par le maître (M) par les données de configuration transmises sur la fréquence de configuration (fk) ou sur les fréquences de configuration, les données de configuration contenant des informations qui
i1) effacent l'affectation entreprise dans l'étape a) entre les esclaves du groupe et les fréquences de communication si l'étape a) a déjà été réalisée, et
i2) affectent à chaque esclave d'un autre groupe d'esclaves au moins une propre fréquence de communication,
k) l'étape b) continue à être réalisée,
l) chacun des esclaves de l'autre groupe
- lit et traite les données d'émission qui ont été envoyées par le maître sur une fréquence qui correspond à la fréquence de communication au moins au nombre de un affectée à cet esclave dans l'étape i),
- et ignore ou rejette les données d'émission qui ont été envoyées par le maître (M) sur une fréquence qui correspond à une fréquence de communication au moins au nombre de un affectée à un autre esclave de l'autre groupe,
de telle sorte que chacun des esclaves de l'autre groupe peut être sollicité individuellement par le maître (M) du fait que le maître (M) transmet à l'esclave sur le bus (B, B') des données d'émission sur au moins une fréquence de communication affectée à cet esclave, de telle sorte que la transmission de données d'émission à partir du maître vers chacun des esclaves de l'autre groupe s'effectue sur la fréquence de communication au moins au nombre de un qui a été affectée à cet esclave dans l'étape i).

20. Système de bus selon la revendication 13, **caractérisé en ce que** les données de configuration contiennent des informations qui affectent chaque esclave (1a, 1b, 1c, 2a, 2b, 2c, 3a, 3b, 3c, 3d) à un groupe d'esclaves.

21. Système de bus selon la revendication 13, **caractérisé en ce que** le maître (M) est en mesure de fournir sur le bus (B, B') les données de configuration qui affectent à chaque esclave (1a, 1b, 1c, 2a, 2b, 2c, 3a, 3b, 3c, 3d) de chaque groupe au moins une fréquence de communication.

22. Système de bus selon l'une des revendications 13 à 21, **caractérisé en ce que** la même fréquence de communication n'est pas affectée à deux esclaves du même groupe.

23. Système de bus selon l'une des revendications 13 à 22, **caractérisé en ce que** le maître (M) est en mesure d'expédier sur le bus (B, B') les données de configuration qui rendent actif par commutation un des groupes de telle sorte que les esclaves de ce groupe peuvent être sollicités par le biais des fréquences de communication qui sont affectées aux esclaves de ce groupe, et rendent passifs par commutation les autres groupes de telle sorte que les esclaves de ces groupes ne peuvent pas être sollicités par le biais de fréquences de communication.

24. Système de bus selon au moins l'une des revendications 13 à 23, **caractérisé en ce que** le système de bus est un système de bus AS-i ou un autre système de bus à deux fils de telle sorte que
- non seulement le trafic de données entre le maître (M) et les esclaves
- mais aussi l'alimentation en tension du maître (M) et des esclaves connectés au bus (B, B') s'effectuent par le biais du bus (B, B'), une porteuse OFDM ou respectivement sa variante de base, une porteuse DMT, est prévue de préférence pour la transmission de signaux.

25. Système de bus selon au moins l'une des revendications 13 à 24, **caractérisé en ce qu'**au moins deux fréquences de communication sont respectivement affectées à chaque esclave du groupe ou à chaque esclave d'au moins un groupe,
- le maître (M) est en mesure d'effectuer, avec chaque esclave du groupe, à des intervalles de temps définis sur les fréquences de communication affectées à cet esclave, respectivement une communication test au moyen de laquelle il définit pour chaque fréquence de communication affectée à l'esclave le rapport signal/bruit correspondant ou le taux d'erreurs sur les bits correspondant,
- le maître (M) est en mesure de communiquer ensuite avec l'esclave sur la fréquence de communication pour laquelle le rapport signal/bruit le plus élevé ou le taux d'erreurs sur les bits le plus faible a été défini.
